# EUROPEAN PATENT APPLICATION

(11) **EP 4 546 729 A1**
(43) Date of publication of application: **30.04.2025**
(21) Application number: 22948255.9
(22) Date of filing: 27.06.2022
(51) Int. Cl.: H04L 27/00

(54) **RANGING METHOD AND APPARATUS, AND COMMUNICATION DEVICE AND STORAGE MEDIUM**

(71) Applicant: Beijing Xiaomi Mobile Software Co., Ltd., Beijing 100085 (CN)
(72) Inventor: SHANG, Zhengyi, Beijing 100085 (CN); LU, WEi, Beijing 100085 (CN)
(74) Representative: Stöckeler, Ferdinand
(86) International application number: PCT/CN2022/101690
(87) International publication number: WO 2024/000132

(57) **Abstract**

The embodiments of the present disclosure relate to a ranging method and apparatus, and a communication device and a storage medium. The method comprises: a location service function determining, at least according to privacy profiles of a user equipment (UE) that are related to a first ranging request, a service parameter for ranging, wherein the first ranging request is a request for performing ranging by means of a sidelink.

## Description

### TECHNICAL FIELD

The present disclosure relates to, but not limited to, the field of wireless communication technologies, and provides a ranging method, a ranging device, a communication device and a storage medium.

### BACKGROUND

Ranging may include determining a ranging parameter between two user equipment (UEs) via a sidelink (SL). The ranging parameter may include at least one of the following parameters: a distance between the two UEs, a direction between one UE and another UE, and a relative position between one UE and another UE. The ranging may also include positioning via the sidelink, i.e., positioning the UE via PC5 and/or SR5. In general, the ranging includes distance measurement, direction measurement, positioning, or a combination thereof.

### SUMMARY

An embodiment of the present disclosure provides a ranging method, a ranging device, a communication device and a storage medium.

According to a first aspect of the disclosure, a ranging method is provided. The ranging method is performed by a location network function, and includes:

determining a service parameter for ranging at least based on a privacy profile of a user equipment (UE) related to a first ranging request; in which the first ranging request is a request for performing the ranging via a sidelink.

In an embodiment, the privacy profile is used to indicate at least one of:
whether the ranging is allowed;
an area range in which the ranging is allowed; or
a time range in which the ranging is allowed.

In an embodiment, the determining the service parameter for the ranging at least based on the privacy profile of the UE related to the first ranging request includes:
receiving the first ranging request sent by a ranging request function;
obtaining the privacy profile of the UE from a unified data management (UDM) based on the first ranging request;
determining whether to provide the service parameter for the ranging based on the privacy profile.

In an embodiment, the ranging method further includes:
determining whether the ranging request function is allowed to request the UE to perform the ranging;
in response to determining that the ranging request function is allowed to request the UE to perform the ranging, determining the service parameter for the ranging at least based on the privacy profile of the UE related to the first ranging request.

In an embodiment, the first ranging request carries an identity of the UE; the location network function is determined by the ranging request function based on the identity of the UE.

In an embodiment, the obtaining the privacy profile of the UE from the UDM based on the first ranging request includes:
determining the UDM corresponding to the UE based on the identity of the UE carried in the first ranging request;
obtaining the privacy profile of the UE from the UDM corresponding to the UE.

In an embodiment, determining the service parameter for the ranging at least based on the privacy profile of the UE related to the first ranging request includes:
in response to the privacy profile indicating the area range in which the ranging is allowed, sending location information request to an access and mobility management function (AMF) of the UE, in which the location information request is used to request location information of the UE from the AMF;
receiving a response to the location information request sent by the AMF based on the location information request, in which the response to the location information request includes the location information of the UE;
determining whether the UE is allowed to perform the ranging at least based on the location information of the UE and the area range.

In an embodiment, the location information request further includes a UE verification indication, and the UE verification indication is used to indicate at least one of:
associated information of the ranging;
whether to indicate associated information of the ranging to the UE; or
whether to verify associated information of the ranging by the UE;
in which the UE verification indication is set by the location network function based on the privacy profile.

In an embodiment, the associated information of the ranging includes at least one of:
an application identifier of an application requesting to perform the ranging; or
a type of the ranging.

In an embodiment, the response to the location information request further includes: a verification result of the UE verifying the associated information.

In an embodiment, the determining whether to allow the UE to perform the ranging at least based on the location information of the UE and the area range includes:
determining whether to allow the UE to perform the ranging at least based on the location information of the UE and the area range, and the verification result.

In an embodiment, the response to the location information request further includes time information for indicating a time when the UE is allowed and/or not allowed to perform the ranging.

In an embodiment, the determining the service parameter for the ranging at least based on the privacy profile of the UE related to the first ranging request includes:
in response to determining that the UE is allowed to perform the ranging based on the privacy profile, sending a second ranging request to the AMF of the UE, in which the second ranging request is used to instruct the UE to perform the ranging.

In an embodiment, the ranging request function includes at least one of:
a core network function;
an application function (AF); or
an entity.

According to a second aspect of the present disclosure, a ranging method, performed by an access and mobility management function (AMF) is provided and includes:
providing a service parameter for ranging based on a sidelink, in which the service parameter for the ranging is determined by a location network function at least based on a privacy profile of a UE associated with the ranging.

In an embodiment, the privacy profile is used to indicate at least one of:
whether the ranging is allowed;
an area range in which the ranging is allowed; or
a time range in which the ranging is allowed.

In an embodiment, the privacy profile is located in a unified data management (UDM) of the UE.

In an embodiment, the providing the service parameter for the ranging based on the sidelink includes:
receiving a location information request sent by the location network function, in which the location information request is used to request location information of the UE from the AMF;
sending a response to the location information request to the location network function, in which the response to the location information request includes the location information of the UE, the location information of the UE is used for the location network function to determine whether to allow the UE to perform the ranging in combination with the area range.

In an embodiment, the location information request further includes a UE verification indication, and the UE verification indication is used to indicate at least one of:
associated information of the ranging;
whether to indicate associated information of the ranging to the UE; or
whether to verify associated information of the ranging by the UE;
in which the UE verification indication is set by the location network function based on the privacy profile.

In an embodiment, the associated information of the ranging includes at least one of:
an application identifier of an application requesting to perform the ranging; or
a type of the ranging.

In an embodiment, the providing the service parameter for the ranging based on the sidelink includes:
in response to the UE verification indication indicating that the associated information of the ranging needs to be indicated to the UE, sending first notification information to the UE, in which the first notification information is used to indicate the associated information of the ranging.

In an embodiment, the providing the service parameter for the ranging based on the sidelink includes:
in response to the UE verification indication indicating that the associated information of the ranging is to be verified by the UE, sending second notification information to the UE, in which the second notification information is used to indicate that the associated information of the ranging needs to be verified by the UE;
receiving verification result information sent by the UE in response to the second notification information, in which the verification result information is used to indicate a verification result of the UE verifying the associated information of the ranging;
the sending the response to the location information request to the location network function includes:
   sending the response to the location information request carrying the verification result to the location network function.

In an embodiment, the ranging method further includes:
in response to determining that the UE needs to send the verification result information and the verification result information is not received, determining that the verification result is that the UE fails to verify the associated information of the ranging.

In an embodiment, the verification result information further includes time information for indicating a time when the UE allows and/or does not allow to perform the ranging;
the sending the response to the location information request to the location network function includes:
sending the response to the location information request carrying the time information to the location network function.

In an embodiment, the providing the service parameter for the ranging based on the sidelink includes:
receiving a second ranging request sent by the location network function, in which the second ranging request is sent by the location network function based on the privacy profile to allow the UE to perform the ranging;
instructing the UE to perform the ranging based on the second ranging request.

According to a third aspect of the present disclosure, a ranging method, performed by a UE, is provided and includes:
performing ranging based on a sidelink, in which the ranging is performed by a location network function at least based on a privacy profile of the UE.

In an embodiment, the privacy profile is used to indicate at least one of:
whether the ranging is allowed;
an area range in which the ranging is allowed; or
a time range in which the ranging is allowed.

In an embodiment, the privacy profile is located in a UDM corresponding to the UE.

In an embodiment, the ranging method further includes:
receiving first notification information sent by an access and mobility management function (AMF), in which the first notification information is used to notify associated information of the ranging; the first notification information is sent by the AMF based on a UE verification indication carried in location information request sent by the location network function, and the UE verification indication is determined by the location network function based on the privacy profile.

In an embodiment, the ranging method further includes:
receiving second notification information sent by the AMF, in which the second notification information is used to notify the UE of associated information of the ranging and to obtain a verification, the second notification information is sent by the AMF based on a UE verification indication carried in location information request sent by the location network function, and the UE verification indication is determined by the location network function based on the privacy profile.

In an embodiment, the ranging method further includes:
sending verification result information to the AMF, in which the verification result information is used to indicate a verification result of the UE verifying the associated information of the ranging.

In an embodiment, the verification result information further includes time information for indicating a time when the UE is allowed and/or not allowed to perform the ranging.

In an embodiment, the ranging method further includes:
in response to failing to verify the associated information of the ranging, not sending the verification result information to the AMF;
in response to failing to verify the associated information of the ranging, sending the verification result information indicating that the verification result is a verification failure to the AMF.

In an embodiment, the location information request further includes a UE verification indication, and the UE verification indication is used to indicate at least one of:
associated information of the ranging;
whether to indicate associated information of the ranging to the UE; or
whether to verify associated information of the ranging by the UE;
in which the UE verification indication is set by the location network function based on the privacy profile.

In an embodiment, the associated information of the ranging includes at least one of:
an application identifier of an application requesting to perform the ranging; or
a type of the ranging.

In an embodiment, the UE is instructed by a second ranging request sent by the location network function and received by the AMF, to perform the ranging, and the second ranging request is sent by the location network function upon determining to allow the UE to perform the ranging based on the privacy profile.

According to a fourth aspect of the present disclosure, a ranging device is provided and includes:
a processing module, configured to determine a service parameter for ranging at least based on a privacy profile of a UE related to a first ranging request; in which the first ranging request is a request for performing the ranging via a sidelink.

In an embodiment, the privacy profile is used to indicate at least one of:
whether the ranging is allowed;
an area range in which the ranging is allowed; or
a time range in which the ranging is allowed.

In an embodiment, the ranging device further includes a transceiver module, configured to:
receive the first ranging request sent by a ranging request function;
obtain the privacy profile of the UE from a unified data management (UDM) based on the first ranging request;
determine whether to provide the service parameter for the ranging based on the privacy profile.

In an embodiment, the processing module is further configured to:
determine whether the ranging request function is allowed to request the UE to perform the ranging;
in response to determining that the ranging request function is allowed to request the UE to perform the ranging, determine the service parameter for the ranging at least based on the privacy profile of the UE related to the first ranging request.

In an embodiment, the first ranging request carries an identity of the UE; the location network function is determined by the ranging request function based on the identity of the UE.

In an embodiment, the processing module is further configured to:
determine the UDM corresponding to the UE based on the identity of the UE carried in the first ranging request;
obtain the privacy profile of the UE from the UDM corresponding to the UE.

In an embodiment, the transceiver module is further configured to:
in response to the privacy profile indicating the area range in which the ranging is allowed, send location information request to an access and mobility management function (AMF) of the UE, in which the location information request is used to request location information of the UE from the AMF;
receive a response to the location information request sent by the AMF based on the location request information, in which the response to the location information request includes the location information of the UE;
the processing module is further configured to determine whether the UE is allowed to perform the ranging at least based on the location information of the UE and the area range.

In an embodiment, the location information request further includes a UE verification indication, and the UE verification indication is used to indicate at least one of:
associated information of the ranging;
whether to indicate associated information of the ranging to the UE; or
whether to verify associated information of the ranging by the UE;
in which the UE verification indication is set by the location network function based on the privacy profile.

In an embodiment, the associated information of the ranging includes at least one of:
an application identifier of an application requesting to perform the ranging; or
a type of the ranging.

In an embodiment, the response to the location information request further includes: a verification result of the UE verifying the associated information.

In an embodiment, the processing module is further configured to:
determine whether to allow the UE to perform the ranging at least based on the location information of the UE and the area range, and the verification result.

In an embodiment, the response to the location information request further includes time information for indicating a time when the UE is allowed and/or not allowed to perform the ranging.

In an embodiment, the transceiver module is further configured to:
in response to determining that the UE is allowed to perform the ranging based on the privacy profile, send a second ranging request to the AMF of the UE, in which the second ranging request is used to instruct the UE to perform the ranging.

In an embodiment, the ranging request function includes at least one of:
a core network function;
an application function (AF); or
an entity.

According to a fifth aspect of the present disclosure, a ranging device is provided and includes:
a transceiver module, configured to provide a service parameter for ranging based on a sidelink, in which the service parameter for the ranging is determined by a location network function at least based on a privacy profile of a UE associated with the ranging.

In an embodiment, the privacy profile is used to indicate at least one of:
whether the ranging is allowed;
an area range in which the ranging is allowed; or
a time range in which the ranging is allowed.

In an embodiment, the privacy profile is located in a unified data management (UDM) of the UE.

In an embodiment, providing the service parameter for the ranging based on the sidelink includes:
the transceiver module is further configured to receive location information request sent by the location network function, in which the location information request is used to request location information of the UE from the AMF;
the transceiver module is further configured to send a response to the location information request to the location network function, in which the response to the location information request includes the location information of the UE, the location information of the UE is used for the location network function to determine whether to allow the UE to perform the ranging in combination with the area range.

In an embodiment, the location information request further includes a UE verification indication, and the UE verification indication is used to indicate at least one of:
associated information of the ranging;
whether to indicate associated information of the ranging to the UE; or
whether to verify associated information of the ranging by the UE;
in which the UE verification indication is set by the location network function based on the privacy profile.

In an embodiment, the associated information of the ranging includes at least one of:
an application identifier of an application requesting to perform the ranging; or
a type of the ranging.

In an embodiment, the transceiver module is further configured to:
in response to the UE verification indication indicating that the associated information of the ranging needs to be indicated to the UE, send first notification information to the UE, in which the first notification information is used to indicate the associated information of the ranging.

In an embodiment, the transceiver module is further configured to:
in response to the UE verification indication indicating that the associated information of the ranging is to be verified by the UE, send second notification information to the UE, in which the second notification information is used to indicate that the associated information of the ranging needs to be verified by the UE;
receive verification result information sent by the UE in response to the second notification information, in which the verification result information is used to indicate a verification result of the UE verifying the associated information of the ranging;
the transceiver module is further configured to:
   send the response to the location information request carrying the verification result to the location network function.

In an embodiment, the ranging device further includes a processing module, configured to:
in response to determining that the UE needs to send the verification result information and the verification result information is not received, determine that the verification result is that the UE fails to verify the associated information of the ranging.

In an embodiment, the verification result information further includes time information for indicating a time when the UE allows and/or does not allow to perform the ranging;
the transceiver module is further configured to:
send the response to the location information request carrying the time information to the location network function.

In an embodiment, the transceiver module is further configured to:
receive a second ranging request sent by the location network function, in which the second ranging request is sent by the location network function based on the privacy profile to allow the UE to perform the ranging;
instruct the UE to perform the ranging based on the second ranging request.

According to a sixth aspect of the present disclosure, a ranging device is provided and includes:
a processing module, configured to perform ranging based on a sidelink, in which the ranging is performed by a location network function at least based on a privacy profile of a UE.

In an embodiment, the privacy profile is used to indicate at least one of:
whether the ranging is allowed;
an area range in which the ranging is allowed; or
a time range in which the ranging is allowed.

In an embodiment, the privacy profile is located in a UDM corresponding to the UE.

In an embodiment, the ranging device further includes a transceiver module, configured to:
receive first notification information sent by an access and mobility management function (AMF), in which the first notification information is used to notify associated information of the ranging; the first notification information is sent by the AMF based on a UE verification indication carried in location information request sent by the location network function, and the UE verification indication is determined by the location network function based on the privacy profile.

In an embodiment, the ranging device further includes a transceiver module, configured to:
receive second notification information sent by the AMF, in which the second notification information is used to notify the UE of associated information of the ranging and to obtain a verification, the second notification information is sent by the AMF based on a UE verification indication carried in location information request sent by the location network function, and the UE verification indication is determined by the location network function based on the privacy profile.

In an embodiment, the transceiver module is further configured to:
send verification result information to the AMF, in which the verification result information is used to indicate a verification result of the UE verifying the associated information of the ranging.

In an embodiment, the verification result information further includes time information for indicating a time when the UE is allowed and/or not allowed to perform the ranging.

In an embodiment, the transceiver module is further configured to:
in response to failing to verify the associated information of the ranging, not send the verification result information to the AMF;
in response to failing to verify the associated information of the ranging, send the verification result information indicating that the verification result is a verification failure to the AMF.

In an embodiment, the location information request further includes a UE verification indication, and the UE verification indication is used to indicate at least one of:
associated information of the ranging;
whether to indicate associated information of the ranging to the UE; or
whether to verify associated information of the ranging by the UE;
in which the UE verification indication is set by the location network function based on the privacy profile.

In an embodiment, the associated information of the ranging includes at least one of:
an application identifier of an application requesting to perform the ranging; or
a type of the ranging.

In an embodiment, the UE is instructed by a second ranging request sent by the location network function and received by the AMF, to perform the ranging, and the second ranging request is sent by the location network function upon determining to allow the UE to perform the ranging based on the privacy profile.

According to a seventh aspect of the present disclosure, a communication device is provided and includes a processor, a memory, and an executable program stored on the memory and executed by the processor, in which the processor executes the executable program to implement steps of the ranging method.

According to an eighth aspect of the present disclosure, a storage medium is provided and stores an executable program thereon, in which the executable program is executed by a processor to implement steps of the ranging method.

According to the ranging method, the ranging device, the communication device and the storage medium provided by the embodiments of the present disclosure, the location network function determines the service parameter for the ranging at least based on the privacy profile of the UE related to the first ranging request; in which the first ranging request is a request for performing the ranging via the sidelink. In this way, the ranging via the sidelink is performed based on the privacy profile of the UE, the privacy requirements of the UE may be met during the ranging process and the security of the ranging may be improved.

It should be understood that the above general description and the detailed description below are only exemplary and explanatory and cannot limit the embodiments of the present disclosure.

### BRIEF DESCRIPTION OF THE DRAWINGS

The drawings herein are incorporated into and constitute a part of the specification, embodiments of the present disclosure are shown, and together with the specification, are used to explain the principles of the embodiments of the present disclosure.
FIG. 1 is a schematic diagram of a structure of a wireless communication system according to an embodiment of the present disclosure;
FIG. 2 is a schematic diagram of a flow chart of a ranging method according to an embodiment of the present disclosure;
FIG. 3 is a schematic diagram of the flow chart of the ranging method according to an embodiment of the present disclosure;
FIG. 4 is a schematic diagram of the flow chart of the ranging method according to an embodiment of the present disclosure;
FIG. 5 is a schematic diagram of the flow chart of the ranging method according to an embodiment of the present disclosure;
FIG. 6 is a schematic diagram of the flow chart of the ranging method according to an embodiment of the present disclosure;
FIG. 7 is a schematic diagram of the flow chart of the ranging method according to an embodiment of the present disclosure;
FIG. 8 is a schematic diagram of the flow chart of the ranging method according to an embodiment of the present disclosure;
FIG. 9 is a schematic diagram of the flow chart of the ranging method according to an embodiment of the present disclosure;
FIG. 10 is a schematic diagram of the flow chart of the ranging method according to an embodiment of the present disclosure;
FIG. 11 is a schematic diagram of a ranging interaction according to an embodiment of the present disclosure;
FIG. 12 is a block diagram of a ranging device according to an embodiment of the present disclosure;
FIG. 13 is a block diagram of a ranging device according to an embodiment of the present disclosure;
FIG. 14 is a block diagram of a ranging device according to an embodiment of the present disclosure;
FIG. 15 is a block diagram of a device for the ranging according to an embodiment of the present disclosure.

### DETAILED DESCRIPTION

Here, embodiments will be described in detail, examples of which are shown in the accompanying drawings. When the following description refers to the drawings, unless otherwise indicated, the same reference numbers in different drawings represent the same or similar elements. The implementations described in the following embodiments do not represent all implementations consistent with the embodiments of the present disclosure. Instead, they are only examples of devices and methods consistent with some aspects of the embodiments of the present disclosure as detailed in the attached claims.

The terms used in the embodiments of the present disclosure are only for the purpose of describing specific embodiments and are not intended to limit the embodiments of the present disclosure. The singular forms of "a" and "the" used in the embodiments of the present disclosure and the attached claims are also intended to include plural forms unless the context clearly indicates other meanings. It should also be understood that the term "and/or" used herein refers to and includes any or all possible combinations of one or more associated listed items.

It should be understood that although the terms first, second, third, etc. may be used to describe various information in the embodiments of the present disclosure, these information should not be limited to these terms. These terms are only used to distinguish the same type of information from each other. For example, without departing from the scope of the embodiments of the present disclosure, the first information may also be referred to as the second information, and similarly, the second information may also be referred to as the first information. Depending on the context, the word "if" as used herein may be interpreted as "at..." or "when..." or "in response to".

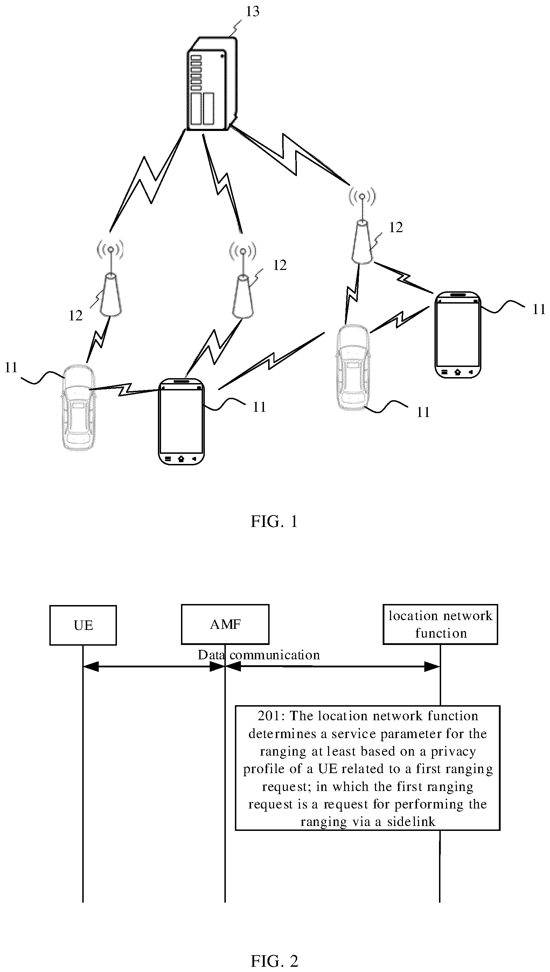

FIG. 1 shows a schematic diagram of a structure of a wireless communication system according to an embodiment of the present disclosure. As shown in FIG. 1, the wireless communication system is a communication system based on the cellular mobile communication technology, and the wireless communication system may include: several terminals 11 and several base stations 12.

Among them, the terminal 11 may be a device that provides voice and/or data connectivity to a user. The terminal 11 can communicate with one or more core networks via a radio access network (RAN). The terminal 11 may be an Internet of Things terminal, such as a sensor device, a mobile phone (or a "cellular" phone), and a computer with an Internet of Things terminal, for example, a fixed, portable, pocket-sized, handheld, computer-built-in or vehicle-mounted device. For example, a station (STA), a subscriber unit, a subscriber station, a mobile station, a mobile, a remote station, an access point, a remote terminal, an access terminal, a user terminal, a user agent, a user device, or a user equipment (UE). Alternatively, terminal 11 may also be a device of an unmanned aerial vehicle. Alternatively, terminal 11 may also be a vehicle-mounted device, such as a driving computer with wireless communication function, or a wireless communication device connected to an external driving computer. Alternatively, terminal 11 may also be a roadside device, such as a streetlamp, signal lamp or other roadside device with wireless communication function.

The base station 12 may be a network side device in the wireless communication system. The wireless communication system may be a 4th generation mobile communication (4G) system, also known as a long term evolution (LTE) system; or, a 5^{th} generation wireless communication system, also known as a new radio (NR) system or a 5G NR system. Alternatively, the wireless communication system may be a next generation system of the 5G system. The access network in the 5G system may be called New Generation-Radio Access Network (NG-RAN), or an MTC system.

The base station 12 may be an evolved base station (eNB) used in the 4G system. Alternatively, the base station 12 may also be a base station (gNB) using a centralized distributed architecture in the 5G system. When the base station 12 uses a centralized distributed architecture, it generally includes a centralized unit (CU) and at least two distributed units (DU). The centralized unit is provided with a protocol stack of a packet data convergence protocol (PDCP) layer, a radio link layer control protocol (RLC) layer, and a media access control (MAC) layer; the distributed unit is provided with a physical (PHY) layer protocol stack. The specific implementation method of the base station 12 is not limited in the embodiments of the present disclosure.

A wireless connection may be established between the base station 12 and the terminal 11 through a wireless air interface. In different implementations, the wireless air interface is based on the fourth generation (4G) mobile communication network technology standard; or, the wireless air interface is based on the fifth generation (5G) mobile communication network technology standard, for example, the wireless air interface is a new air interface; or, the wireless air interface may also be based on the next generation mobile communication network technology standard of 5G.

In some embodiments, an E2E (End to End) connection may also be established between the terminals 11, for example, V2V (vehicle to vehicle) communication, V2I (vehicle to infrastructure) communication and V2P (vehicle to pedestrian) communication in vehicle to everything (V2X) communication.

In some embodiments, the wireless communication system may further include a network management device 13.

Several base stations 12 are respectively connected to the network management device 13. Among them, the network management device 13 may be a core network device in the wireless communication system, for example, the network management device 13 may be a mobility management entity (MME) in the Evolved Packet Core (EPC). Alternatively, the network management device may also be other core network devices, such as a Serving Gate Way (SGW), a Public Data Network Gate Way (PGW), a Policy and Charging Rules Function (PCRF) or a Home Subscriber Server (HSS). The implementation form of the network management device 13 is not limited in the embodiments of the present disclosure.

The fifth generation (5G) and other cellular mobile communication systems can support ranging/sidelink (SL) positioning services. Here, ranging/SL positioning services may be ranging/positioning services based on the sidelink. Ranging/SL positioning services may be exposed to 5G networks and application servers. The current ranging/SL positioning services do not consider the privacy issues of UEs.

Therefore, how to protect the privacy of the UE during ranging/SL positioning services is an urgent problem to be solved.

It should be noted that when a plurality of execution entities may be involved in all embodiments of the present disclosure, the transmission from one execution entity to another execution entity specified in the embodiments of the present disclosure may refer to one execution entity directly transmitting to another execution entity, or it may refer to one execution entity transmitting to another execution entity via any other device; this is not limited in the embodiments of the present disclosure.

As shown in FIG. 2, an embodiment of the present disclosure provides a ranging method that may be executed by a location network function of a cellular mobile communication system, the ranging method includes the following step.

Step 201: The location network function determines a service parameter for the ranging at least based on a privacy profile of a UE related to a first ranging request; in which the first ranging request is a request for performing the ranging via a sidelink.

The location network function (Location NF) may be a gateway mobile location center (GMLC) or a ranging/sidelink positioning management function (RSMF), etc. The location network function may be responsible for verifying the privacy profile of the UE associated with ranging and controlling the ranging, etc. The location network function may be an entity on the network side or a function on the network side, which is not limited in the embodiments of the present disclosure. In one implementation, the location network function may be a function in any entity on the network side or a new entity. In an embodiment of the present disclosure, the location network function may be implemented by an existing network element or an entity or a function on the network side, so it should be considered that its name "location network function" is not a limitation on the function or the network element.

In a possible implementation, the ranging based on the sidelink may include ranging based on a signal on the PC5 port and/or SR5 port of the sidelink.

Here, the ranging may include but is not limited to at least one of: determining a distance between two or more UEs via the sidelink; determining a relative direction between one UE and another UE via the sidelink; determining a relative position between one UE and another UE via the sidelink. The ranging may also include sidelink positioning, that is, positioning the UE via the sidelink.

Exemplarily, the target UE may be ranged in combination with a plurality of UEs to determine the distance and/or direction value between the target UE and the plurality of UEs. The triangulation positioning method may also be used to determine the coordinates of the target UE through the ranging results of the plurality of UEs and the target UE to achieve sidelink positioning.

In this embodiment, unless otherwise specified, "ranging" may include at least one of: determining the distance between two or more UEs via the sidelink, determining the relative direction between one UE and another UE via the sidelink, determining the relative position between one UE and another UE via the sidelink, positioning the UE via the sidelink, etc. Among them, determining the relative direction between one UE and another UE via the sidelink and determining the relative position between one UE and another UE via the sidelink are often performed together.

In one possible implementation, the ranging between a plurality of UEs to be measured based on the sidelink may be used to determine the distance and/or direction between N UEs to be measured in the plurality of UEs to be measured and other UEs in the plurality of UEs to be measured, and may also be used to determine the position of N UEs to be measured in the plurality of UEs to be measured, where N is a positive integer greater than or equal to 1 and less than or equal to the total number of UEs to be measured.

For example, the UE and/or the core network equipment (such as LMF, etc.) may determine the distance between UEs based on a flight time of a signal transmitted by PC5 and/or SR5 port between UEs. Further, positioning of a UE at an unknown position may be achieved based on the relative positions between a plurality of UEs at known positions and UEs at unknown positions, that is, positioning of UE at an unknown position is achieved. Here, the position of the UE may include but is not limited to a geographic coordinate position of the UE, a relative position of the UE to a reference point (such as a base station or a UE at a known position), etc. This is not limited here.

The location network function may provide the service parameter for the ranging based on the first ranging request.

In a possible implementation, the service parameter for the ranging provided by the location network function include but are not limited to at least one of:
controlling whether the UE performs the ranging;
transmitting information during the ranging process;
determining the privacy profile of the UE;
performing operations associated with the privacy profile of the UE, such as determining whether a current situation meets a privacy profile requirement, etc.

In a possible implementation, the location network function may control the UE to perform the ranging through core network elements such as AMF.

Here, the UE associated with the first ranging request may be a UE associated with the ranging, and the UE associated with the ranging may include but are not limited to UEs participating in the ranging. The UE associated with the ranging may include but are not limited to at least one of: a reference UE, a target UE, an observer UE, a third party UE, or an assistant UE, etc.

The privacy profile may be used to indicate the privacy information of the UE associated with the ranging. The ranging behavior of the UE is limited.

In a possible implementation, the privacy profile of the UE may indicate the type of ranging that the UE is allowed to perform, and/or the type of ranging that the UE is not allowed to perform.

The type of the ranging may be determined based on the number of UEs participating in the ranging. For example, the type of the ranging includes ranging of different numbers of UEs.

The type of the ranging may also be determined based on the ranging result of the ranging. For example, the type of ranging may include ranging of relative distance measurement, ranging of relative direction measurement, ranging of UE positioning, etc.

In a possible implementation, the privacy profile of the UE may indicate the accuracy of ranging that the UE is allowed to perform, and/or the accuracy of ranging that the UE is not allowed to perform. In this embodiment of the present disclosure, the "accuracy of ranging that the UE is allowed to perform" may be specifically a value of accuracy, or a range of accuracy. Based on the privacy profile of the UE, it may be determined what accuracy of positioning the UE allows.

In a possible implementation, the privacy profile of the UE may be pre-stored in the core network. The privacy profile may be provided by the UE, or may be agreed upon between the UE and the network side, or may be specified by the communication protocol, or may be specified by the network operator.

In an embodiment, the privacy profile is used to indicate at least one of:
whether the ranging is allowed;
an area range in which the ranging is allowed;
a time range in which the ranging is allowed.

In a possible implementation, the location network function determines that the privacy profile of the UE indicates that the UE is allowed to perform the ranging, and then continues the subsequent steps of the ranging, such as instructing the UE to perform the ranging. The location network function determines that the privacy profile of the UE may indicate that the UE is not allowed to perform the ranging, and then stops the subsequent steps of the ranging, such as not instructing the UE to perform ranging or perform any operation.

In a possible implementation, whether the ranging is allowed may include whether the UE is authorized to perform the ranging.

The time range in which the ranging is allowed may be the time range in which the UE is allowed to perform the ranging, including at least one of the following: a start time, an end time, and a duration of allowing the UE to perform the ranging.

In a possible implementation, the area range may include at least one of the following: a geographical range, a cell to which the UE belongs, and a coverage range of a base station to which the UE belongs.

In a possible implementation, the location network function provides ranging services within the time range in which the UE is allowed to perform the ranging, such as instructing the UE to perform the ranging within the time range in which the UE is allowed to perform the ranging.

In a possible implementation, there may be a plurality of UEs associated with the ranging, and the service parameter for the ranging may be provided based on the privacy profiles corresponding to the plurality of UEs.

Exemplarily, for the ranging performed by two UEs, the location network function may provide ranging services to the two UEs when the privacy profiles of the two UEs both indicate that ranging is allowed, such as instructing the two UEs to perform the ranging.

The first ranging request may be sent by a first ranging requester. After receiving the first ranging request, the location network function may determine the UE that performs the ranging, and then provide ranging services based on the privacy profile of the UE. Among them, the first ranging requester may be either a UE, an access network, or a network element or a function of a core network.

The first ranging request may indicate a UE that needs to perform the ranging.

The location network function may instruct the AMF and other core network elements to provide services for the ranging based on the privacy profile of the UE, such as transmitting information during the ranging process, instructing the UE to perform the ranging, etc.

The UE may obtain the information required for the ranging based on the indication of the location network function, and perform the ranging.

In this way, the ranging via the sidelink is performed based on the privacy profile of the UE, and the privacy requirements of the UE may be met during the ranging process, thereby improving the security of the ranging.

In an embodiment, the determining, by the location network function, the service parameter for the ranging at least based on the privacy profile of the UE related to the first ranging request; in which the first ranging request is a request for the ranging via the sidelink, includes the following steps.

The location network function receives the first ranging request sent by the ranging request function.

The location network function obtains the privacy profile of the UE from a unified data management (UDM) based on the first ranging request.

The location network function determines whether to provide the service parameter for the ranging based on the privacy profile.

The ranging request function may be a network function or an entity that requests to perform the ranging based on the sidelink from the location network function.

In an embodiment, the ranging request function includes at least one of:
a core network function;
an application function (AF); or
an entity.

Here, the first ranging request may be sent by the ranging request function to the location network function. When the application in the ranging request function has a ranging requirement, the ranging request function sends the first ranging request to the location network function.

In an embodiment, the first ranging request carries the identity of the UE; in which the location network function is determined by the ranging request function based on the identity of the UE.

When the ranging request function has a ranging requirement, the location network function may be determined according to the identity of the UE (such as SUPI). And the identity of the UE is carried in the first ranging request and sent to the location network function.

The privacy profile of the UE may be pre-stored in the UDM. The location network function may obtain the privacy profile from the UDM.

The location network function may query the privacy profile of the UE in the UDM.

In a possible implementation, the privacy profiles of a plurality of UEs performing the ranging may be stored in the same UDM, or the privacy profiles of a plurality of UEs performing the ranging may be stored in different UDMs, or the privacy profiles of the plurality of UEs performing the ranging may be stored in completely different UDMs.

In a possible implementation, the first ranging request sent by the ranging request function to the location network function may include at least one of: an identity of the UE that needs to perform the ranging, a ranging result (distance and/or angle) and a required quality of service (QoS).

The location network function may obtain the privacy profile of each UE from the UDM corresponding to each UE, and determine whether to provide the ranging service based on the privacy profile of each UE.

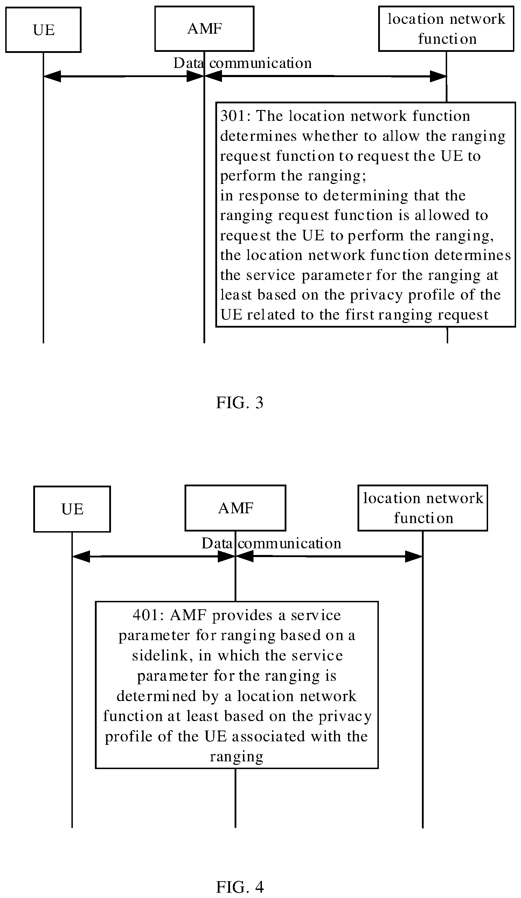

As shown in FIG. 3, an embodiment of the present disclosure provides a ranging method that may be performed by the location network function of the cellular mobile communication system, the ranging method includes the following step.

Step 301: The location network function determines whether to allow the ranging request function to request the UE to perform the ranging.

In response to determining that the ranging request function is allowed to request the UE to perform the ranging, the location network function determines the service parameter for the ranging at least based on the privacy profile of the UE related to the first ranging request.

Step 301 may be implemented alone or in combination with step 201. That is, the location network function may determine the service parameter for the ranging according to the scheme of the step 201.

The location network function may determine whether the ranging request function is authorized to provide ranging service to the UE performing the ranging in the first ranging request. If the ranging request function is authorized to provide the ranging service to the UE, the location network function provides the ranging service based on the privacy profile of the UE indicating the ranging in the first ranging request.

In an embodiment, the obtaining, by location network function, the privacy profile of the UE from the UDM based on the first ranging request, includes:
determining, by the location network function, the UDM corresponding to the UE based on the identity of the UE carried in the first ranging request;
obtaining, by the location network function, the privacy profile of the UE from the UDM corresponding to the UE.

The first ranging request may carry the identity of the UE. The identity of the UE may include SUPI. The location network function may determine the UDM based on the identity of the UE.

The location network function may call the Nudm_SDM_Get service operation from the UDM corresponding to the UE to obtain the privacy profile of the UE. The UDM returns the privacy profile of the UE. The location network function may check the privacy configuration of the UE. If the ranging is not allowed in at least one UE associated with the ranging, the service parameters for the ranging are stopped.

In an embodiment, determining, by the location network function, the service parameter for the ranging at least based on the privacy profile of the UE related to the first ranging request, includes:
sending, by the location network function, location information request to the access and mobility management function (AMF) corresponding to the UE in response to the privacy profile indicating the area range in which the ranging is allowed, in which the location information request is used to request the location information of the UE from the AMF;
receiving, by the location network function, the response to the location information request sent by the AMF based on the location information request, in which the response to the location information request e includes the location information of the UE;
determining, by the location network function, whether the UE is allowed to perform the ranging based at least on the location information of the UE and the area range.

If the privacy profile indicates the area range in which the ranging is allowed, the location network function needs to determine whether the current location of the UE belongs to the area range. If the location network function determines that the current location of the UE belongs to the area range, the UE is allowed to perform the ranging. If the location network function determines that the current location of the UE does not belong to the area range, the UE is not allowed to perform the ranging.

In a possible implementation, the location network function needs to determine the locations of all UEs participating in the ranging, and determine whether each UE is located in the area range in which each UE is allowed to perform the ranging.

The location network function may send location information request to the AMF of each UE to request to obtain the location information of the UE.

Exemplarily, the location network function may call the Nudm_UECM_Get service operation from the UDM corresponding to the UE. The UDM may return the network address of the AMF currently serving the UE.

Exemplarily, the location network function may call the Namf_Location_ProvideLocationInfo service operation from the AMF to request the location information of the UE provided by the network.

Here, the location information may include at least one of: the geographical location of the UE, the cell where the UE is located, and the base station to which the UE belongs.

In a possible implementation, the location information may be stored in the AMF during historical positioning, UE access, cell handover, etc.

In a possible implementation, the AMFs of a plurality of UEs performing the ranging may be the same, or the AMFs of the plurality of UEs performing the ranging may be completely different, or the AMFs of the plurality of UEs performing the ranging may not be completely the same.

The AMF may return a response to the location information request to the location network function, and the response to the location information request may carry the location information of the UE.

Exemplarily, the AMF returns a Namf_Location_ProvideLocationInfo response to the location network function to return the location of the UE provided by the network.

After the location network function determines the location information of the UE, it may determine whether the UE is in the area range in which the ranging is allowed, and then determine whether the UE is allowed to perform the ranging.

In an embodiment, the location information request also includes a UE verification indication, which is used to indicate at least one of:
associated information of the ranging;
whether to indicate associated information of the ranging to the UE; or
whether to verify associated information of the ranging by the UE;
in which the UE verification indication is set by the location network function based on the privacy profile.

The location network function may determine the UE verification indication based on the privacy profile. The privacy profile may indicate the information carried by the UE verification indication. The location network function may carry the UE verification indication in the location information request to indicate to the AMF the associated information of the ranging that needs to be verified by the UE.

The associated information of the ranging may be used to indicate the requester of the ranging, etc.

In an embodiment, the associated information of the ranging includes at least one of the following:
an application identifier of an application requesting to perform the ranging; or
a type of the ranging.

The ranging may be initiated by the application in the ranging request function, and the location network function may send the application identifier of the application to the AMF.

The location network function may indicate to the AMF that the associated information of the ranging is sent to the UE.

The location network function may also indicate to the AMF that the UE verifies the associated information of the ranging.

Exemplarily, the location network function may indicate to the AMF the application identifier of the application requesting the ranging, which is sent by the AMF to the UE for verification to determine whether the application is authorized by the UE to request the ranging.

In one possible implementation, the location network function may indicate that the AMF does not need to send the associated information to the UE. For example, the location network function indicates that the associated information does not need to be sent to the UE and the associated information does not need to be verified by the UE, and indicates that the AMF does not need to send the associated information to the UE.

In one possible implementation, the location network function may indicate that the AMF indicates that the associated information of the ranging is sent to the UE, but the UE does not need to verify the associated information of the ranging. Then, after receiving the associated information of the ranging, the AMF may carry the associated information of the ranging in the first notification information and send the same to the UE.

In one possible implementation, the location network function may instruct the AMF to instruct to send the associated information of the ranging to the UE, and the UE needs to verify the associated information of the ranging. Then, after receiving the associated information of the ranging, the AMF may instruct the UE to verify the associated information of the ranging through the second notification information. The second notification information may simultaneously indicate the associated information of the ranging to the UE, and instruct the UE to verify the associated information of the ranging. The first notification information and the second notification information may be the same signaling.

The UE may verify the associated information of the ranging, and send the verification result to the AMF.

In one possible implementation, the verification result may include verification success or verification failure.

In an embodiment, the response to the location information request also includes: the verification result of the UE verifying the associated information.

The AMF may send the verification result determined by the UE to the location network function.

Exemplarily, the AMF may return a Namf_Location_ProvideLocationInfo response to the location network function to return the location of the UE provided by the network, and include the verification result.

In an embodiment, the determining, by the location network function, whether the UE is allowed to perform the ranging at least based on the location information of the UE and the area range, includes:
determining, by the location network function, whether the UE is allowed to perform the ranging at least based on the location information of the UE and the area range, and the verification result.

After determining the location information of the UE, the location network function may determine whether the UE is in the area range where the ranging is allowed, and determine the verification result at the same time, and then determine whether the UE is allowed to perform the ranging.

Exemplarily, the location network function may determine that the UE is allowed to perform the ranging when the UE is in the area range where the ranging is allowed and the verification result is successful.

In a possible implementation, the verification result returned by the UE also includes a timestamp.

The location network function determines whether the UE is allowed to perform the ranging based on the time range in which the ranging is allowed and the timestamp.

For example, if the timestamp is within the time range, the UE is allowed to perform the ranging, otherwise, the UE is not allowed to perform the ranging.

In an embodiment, the response to the location information request also includes time information for indicating a time when the UE is allowed and/or not allowed to perform ranging.

In one possible implementation, the time information is used to indicate the time that the UE is allowed and/or not allowed to perform the ranging after the current ranging.

The AMF may carry the time information in the response to the location information request and send the time information to the location network function. The location network function may determine the time when the UE is allowed and/or not allowed to perform the ranging

In an embodiment, the determining, by the location network function, the service parameter for the ranging at least based on the privacy profile of the UE related to the first ranging request, includes:
in response to the location network function determining that the UE is allowed to perform the ranging based on the privacy profile, sending a second ranging request to the AMF of the UE, in which the second ranging request is used to instruct the UE to perform the ranging.

The location network function determines that the UE is allowed to perform ranging based on the privacy profile (for example, the location network function determines that the positions of the two UEs that are allowed to perform the ranging based on the privacy profile are both within the respective area ranges in which the ranging is allowed, and the UEs are both within the respective time ranges in which the ranging is allowed). The location network function may send a second ranging request to the serving AMF, instructing the AMF to provide the ranging services based on the second ranging request. The serving AMF may be the AMF associated with the UE performing the ranging.

Here, the second ranging request may be the same as or different from the first ranging request. The second ranging request may indicate the UE performing the ranging, the required ranging result and other ranging requirements.

The serving AMF may forward the second ranging request to the UE through the NAS signaling. Here, the UE may be a UE associated with the ranging.

The UE performs the ranging based on the second ranging request. For example, the reference UE may initiate the ranging based on the sidelink to the target UE based on the second ranging request. The ranging process may include ranging discovery and service operations.

The reference UE may send the ranging result to the serving AMF. The serving AMF forwards the ranging result to the location network function. The location network function forwards the ranging result to the ranging request function, thereby completing the ranging.

Here, the ranging result may be the original measurement data such as the signal flight time obtained by the UE when measuring the signal, etc., or the calculation result of the distance, direction, position, etc. obtained after the original data is processed.

As shown in FIG. 4, an embodiment of the present disclosure provides a ranging method that may be executed by the AMF of a cellular mobile communication system, and includes the following step.

Step 401: AMF provides a service parameter for ranging based on a sidelink, in which the service parameter for the ranging is determined by a location network function at least based on the privacy profile of the UE associated with the ranging.

The location network function (Location NF) may be a Gateway Mobile Location Center (GMLC) or a ranging/sidelink positioning management function (Ranging/SL positioning Management Function, RSMF), etc. The location network function may be responsible for verifying the privacy profile of the UE associated with the ranging and controlling the ranging, etc. The location network function may be an entity on the network side or a function on the network side, and the embodiments of the present disclosure do not limit this. In one implementation, the location network function may be a function in any entity on the network side or a new entity. In the embodiments of the present disclosure, the location network function may be implemented by an existing network element or entity or function on the network side, so it should be considered that its name "location network function" is not a limitation on the function or network element.

In a possible implementation, the ranging based on the sidelink may include ranging based on a signal on a PC5 port and/or an SR5 port of the sidelink.

Here, the ranging may include but is not limited to at least one of: determining the distance between two or more UEs via the sidelink; determining the relative direction between one UE and another UE via the sidelink; determining the relative position between one UE and another UE via the sidelink. The ranging may also include sidelink positioning, that is, positioning the UE via the sidelink.

Exemplarily, the ranging may be performed on a target UE in combination with a plurality of UEs to determine the distance and/or direction value between the target UE and the plurality of UEs. Triangulation positioning may also be used to determine the coordinates of the target UE with the ranging results between the plurality of UEs and the target UE, thereby achieving sidelink positioning.

In this embodiment, unless otherwise specified, "ranging" may include at least one of: determining the distance between two or more UEs via the sidelink, determining the relative direction between one UE and another UE via the sidelink, determining the relative position between one UE and another UE via the sidelink, positioning the UE via the sidelink, etc. Among them, determining the relative direction between one UE and another UE via the sidelink and determining the relative position between one UE and another UE via the sidelink are often performed together.

In a possible implementation, the ranging between a plurality of UEs to be measured based on the sidelink may be used to determine the distance and/or direction of N UEs to be measured in the plurality of UEs to be measured and other UEs in the plurality of UEs to be measured, and may also be used to determine positions of the N UEs to be measured in the plurality of UEs to be measured, where N is a positive integer greater than or equal to 1 and less than or equal to a total number of UEs to be measured.

For example, the UE and/or core network equipment (such as LMF, etc.) may determine the distance between UEs based on the flight time of the signal transmitted by PC5/SR5 ports between UEs. Further, positioning of UEs at unknown positions may be achieved based on the relative positions between a plurality of UEs at known positions and UEs at unknown positions, that is, positioning of the UEs at unknown position is achieved. Here, the position of the UE may include but is not limited to the geographical coordinate position of the UE, the relative position of the UE relative to a reference point (such as a base station or a UE at a known position), etc. It is not limited here.

The location network function may provide the service parameter for the ranging based on the first ranging request.

In a possible implementation, the service parameter for the ranging provided by the location network function include but are not limited to at least one of:
controlling whether the UE performs the ranging;
transmitting information during the ranging process;
determining the privacy profile of the UE;
performing operations associated with the privacy profile of the UE, such as determining whether the current situation meets the privacy profile requirements, etc.

In a possible implementation, the location network function may control the UE to perform the ranging through core network elements such as AMF.

Here, the UE associated with the first ranging request may be a UE associated with the ranging, and the UE associated with the ranging may include but are not limited to UEs participating in the ranging. The UE associated with the ranging may include but are not limited to at least one of: a reference UE, a target UE, an observer UE, a third-party UE, an assisting UE, etc.

The privacy profile may be used to indicate the privacy information of the UE associated with the ranging, which limits the ranging behavior of the UE.

In a possible implementation, the privacy profile of the UE may indicate the type of ranging that the UE is allowed to perform, and/or the type of ranging that the UE is not allowed to perform.

The type of ranging may be determined based on the number of UEs participating in the ranging. For example, the type of ranging includes ranging of different numbers of UEs.

The type of ranging may also be determined based on the ranging result of the ranging. For example, the type of ranging may include ranging for relative distance measurement, ranging for relative direction measurement, ranging for UE positioning, etc.

In a possible implementation, the privacy profile of the UE may indicate the accuracy of the ranging that the UE is allowed to perform, and/or the accuracy of the ranging that the UE is not allowed to perform. In this embodiment of the present disclosure, the "accuracy of the ranging that the UE is allowed to perform" may be specifically a value of accuracy, or an interval of accuracy. Based on the privacy profile of the UE, accuracy of positioning that the UE allows may be determined.

In a possible implementation, the privacy profile of the UE may be pre-stored in the core network. The privacy profile may be provided by the UE, or may be agreed upon between the UE and the network side, or may be specified by the communication protocol, or may be specified by the network operator.

In an embodiment, the privacy profile is used to indicate at least one of:
whether the ranging is allowed;
the area range in which the ranging is allowed; or
the time range in which the ranging is allowed.

In a possible implementation, the location network function determines that the privacy profile of the UE indicates that the UE is allowed to perform the ranging, and then continues the subsequent steps of the ranging, such as instructing the UE to perform the ranging. The location network function determines that the privacy profile of the UE may indicate that the UE is not allowed to perform the ranging, and then stops the subsequent steps of the ranging, such as not instructing the UE to perform the ranging or perform any operation.

In a possible implementation, whether the ranging is allowed may include whether the UE is authorized to perform the ranging.

The time range in which the ranging is allowed may be the time range for allowing the UE to perform the ranging, including at least one of: the start time, the end time, and duration of allowing the UE to perform the ranging.

In a possible implementation, the area range may include at least one of: the geographical range, the cell to which the UE belongs, and the coverage range of the base station to which the UE belongs.

In a possible implementation, the location network function provides ranging services within the time range in which the UE is allowed to perform the ranging, such as instructing the UE to perform the ranging within the time range in which the UE is allowed to perform the ranging.

In a possible implementation, there may be a plurality of UEs associated with the ranging, and the service parameter for the ranging may be provided based on the privacy profile corresponding to the plurality of UEs.

Exemplarily, for the ranging performed by two UEs, the location network function may provide ranging services to the two UEs when the privacy profile of the two UEs both indicate that the ranging is allowed, such as instructing the two UEs to perform the ranging.

The first ranging request may be sent by a first ranging requester. After receiving the first ranging request, the location network function may determine the UE that performs the ranging, and then provide ranging services based on the privacy profile of the UE. Among them, the first ranging requester may be either a UE, an access network, or a network element or a function of the core network.

The first ranging request may indicate the UE that needs to perform the ranging.

The location network function may instruct the AMF and other core network elements to provide services for the ranging based on the privacy profile of the UE, such as transmitting information in the ranging process, instructing the UE to perform the ranging, etc.

The UE may obtain the information required for the ranging based on the instructions of the location network function and perform the ranging.

In this way, the ranging via the sidelink is performed based on the privacy profile of the UE, and the privacy requirement of the UE may be met during the ranging process, thereby improving the security of the ranging.

In an embodiment, the privacy profile is located in the unified data management (UDM) of the UE.

Here, the first ranging request may be sent by the ranging request function to the location network function. When the application in the ranging request function has a ranging requirement, the ranging request function sends the first ranging request to the location network function.

In an embodiment, the ranging request function includes at least one of:
a core network function;
an application function (AF); or
an entity.

In an embodiment, the first ranging request carries the identity of the UE; in which the location network function is determined by the ranging request function based on the identity of the UE.

When the ranging request function has a ranging requirement, the location network function may be determined based on the identity of the UE (such as SUPI). The identity of the UE is carried in the first ranging request and sent to the location network function.

The privacy profile of the UE may be pre-stored in the UDM. The location network function may obtain the privacy profile from the UDM.

The location network function may query the privacy profile of the UE in the UDM.

In a possible implementation, the privacy profiles of a plurality of UEs performing the ranging may be stored in the same UDM, or the privacy profiles of the plurality of UEs performing the ranging may be stored in different UDMs, or the privacy profiles of the plurality of UEs performing the ranging may be stored in completely different UDMs.

In a possible implementation, the first ranging request from the ranging request function to the location network function may include at least one of: an identifier of the UE that needs to perform the ranging, the ranging result (distance and/or angle) and the required quality of service (QoS).

The location network function may obtain the privacy profile of each UE from the UDM corresponding to each UE, and determine whether to provide the ranging service based on the privacy profile of each UE.

In a possible implementation, the location network function determines whether to allow the ranging request function to request the UE to perform the ranging;

In response to determining that the ranging request function is allowed to request the UE to perform the ranging, the location network function determines the service parameters of the ranging at least based on the privacy profile of the UE related to the first ranging request.

The location network function may determine whether the ranging request function is authorized to provide the ranging service to the UE performing the ranging in the first ranging request. If the ranging request function is authorized to provide the ranging service to the UE, the location network function provides the ranging service based on the privacy profile of the UE performing the ranging indicated in the first ranging request.

In one possible implementation, the location network function determines the UDM corresponding to the UE based on the identity of the UE carried in the first ranging request; the location network function obtains the privacy profile of the UE from the UDM corresponding to the UE.

The first ranging request may carry the identity of the UE. The identity of the UE may include SUPI. The location network function may determine the UDM based on the identity of the UE.

The location network function may call the Nudm_SDM_Get service operation from the UDM corresponding to the UE to obtain the privacy profile of the UE. The UDM returns the privacy profile of the UE. The location network function may check the privacy profile of the UE. If at least one UE associated with the ranging does not allow the ranging, the service parameter for the ranging are stopped.

In an embodiment, the providing, by the AMF, the service parameter for the ranging based on the sidelink includes:
receiving, by the AMF, location information request sent by the location network function, in which the location information request is used to request the location information of the UE from the AMF;
sending, by the AMF, a response to the location information request to the location network function, in which the response to the location information request includes the location information of the UE, the location information of the UE is used for the location network function to determine whether the UE is allowed to perform the ranging in combination with the area range.

If the privacy profile indicates an area range in which the ranging is allowed, the location network function needs to determine whether the current location of the UE belongs to the area range. If the location network function determines that the current location of the UE belongs to the area range, the UE is allowed to perform the ranging. If the location network function determines that the current location of the UE does not belong to the area range, the UE is not allowed to perform the ranging.

In a possible implementation, the location network function needs to determine the locations of all UEs participating in the ranging, and determine whether each UE is located in the area range in which each UE is allowed to perform the ranging.

The location network function may send location information request to the AMF of each UE to request to obtain the location information of the UE.

Exemplarily, the location network function may call the Nudm_UECM_Get service operation from the UDM corresponding to the UE. The UDM may return the network address of the UE currently serving the AMF.

Exemplarily, the location network function may call the Namf_Location_ProvideLocationInfo service operation from the AMF to request the location information of the UE provided by the network.

Here, the location information may include at least one of: the geographical location of the UE, the cell where the UE is located, and the base station to which the UE belongs.

In a possible implementation, the location information may be stored in the AMF during historical positioning, UE access, cell handover, etc.

In a possible implementation, the AMFs of a plurality of UEs performing the ranging may be the same, or the AMFs of the plurality of UEs performing the ranging may be completely different, or the AMFs of the plurality of UEs performing the ranging may not be completely the same.

The AMF may return a response to the location information request to the location network function, and the response to the location information request may carry the location information of the UE.

Exemplarily, the AMF returns a Namf_Location_ProvideLocationInfo response to the location network function to return the location of the UE provided by the network.

After the location network function determines the location information of the UE, it may determine whether the UE is in the area range in which the ranging is allowed, and then determine whether the UE is allowed to perform the ranging.

In an embodiment, the location information request also includes a UE verification indication, which is used to indicate at least one of:
associated information of the ranging;
whether to indicate the associated information of the ranging to the UE; or
whether to verify the associated information of the ranging by the UE;
in which the UE verification indication is set by the location network function based on the privacy profile.

The location network function may determine the UE verification indication based on the privacy profile. The privacy profile may indicate the information carried by the UE verification indication. The location network function may carry the UE verification indication in the location information request to indicate to the AMF the associated information of the ranging that needs to be verified by the UE.

The associated information of the ranging may be used to indicate the requester of the ranging, etc.

In an embodiment, the associated information of the ranging includes at least one of:
the application identifier of the application requesting to perform the ranging;
the type of the ranging.

The ranging may be initiated by an application in the ranging request function, and the location network function may send an application identifier of the application to the AMF.

The location network function may indicate to the AMF that the associated information of the ranging is sent to the UE.

The location network function may also indicate to the AMF that the UE verifies the associated information of the ranging.

Exemplarily, the location network function may indicate to the AMF the application identifier of the application requesting the ranging, which is sent by the AMF to the UE for verification to determine whether the application is authorized by the UE to request the ranging.

In one possible implementation, the location network function may indicate to the AMF that the associated information does not need to be sent to the UE. For example, the location network function indicates that the associated information does not need to be sent to the UE and the associated information does not need to be verified by the UE, indicating to the AMF that the associated information does not need to be sent to the UE.

In an embodiment, the providing, by the AMF, the service parameter for the ranging based on the sidelink, includes:
in response to the UE verification indication indicating that the associated information of the ranging needs to be indicated to the UE, sending, by the AMF, a first notification information to the UE, in which the first notification information is used to indicate the associated information of the ranging.

In one possible implementation, the location network function may instruct the AMF to indicate that the associated information of the ranging is sent to the UE, but the UE does not need to verify it. Then, after receiving the associated information of the ranging, the AMF may carry the associated information of the ranging in the first notification information and send it to the UE.

In an embodiment, the providing, by the AMF, the service parameter for the ranging based on the sidelink, includes:
in response to the UE verification indication indicating that the associated information of the ranging is to be verified by the UE, sending second notification information to the UE, in which the second notification information is used to indicate that the associated information of the ranging needs to be verified by the UE;
receiving verification result information sent by the UE in response to the second notification information, in which the verification result information is used to indicate a verification result of the UE verifying the associated information of the ranging;
sending the response to the location information request to the location network function includes:
   sending the response to the location information request carrying the verification result to the location network function.

In one possible implementation, the location network function may instruct the AMF to indicate that the associated information of the ranging is sent to the UE, and the UE needs to verify it. Then, after receiving the associated information of the ranging, the AMF may instruct the UE to verify the associated information of the ranging through the second notification information. The second notification information may simultaneously indicate the associated information of the ranging to the UE, and instruct the UE to verify the associated information of the ranging. The first notification information and the second notification information may be the same signaling.

The UE may verify the associated information of the ranging and send the verification result to the AMF.

In one possible implementation, the verification result may include verification success or verification failure.

The AMF may send the verification result determined by the UE to the location network function.

Exemplarily, the AMF may return a Namf_Location_ProvideLocationInfo response to the location network function to return the position of the UE provided by the network and include the verification result.

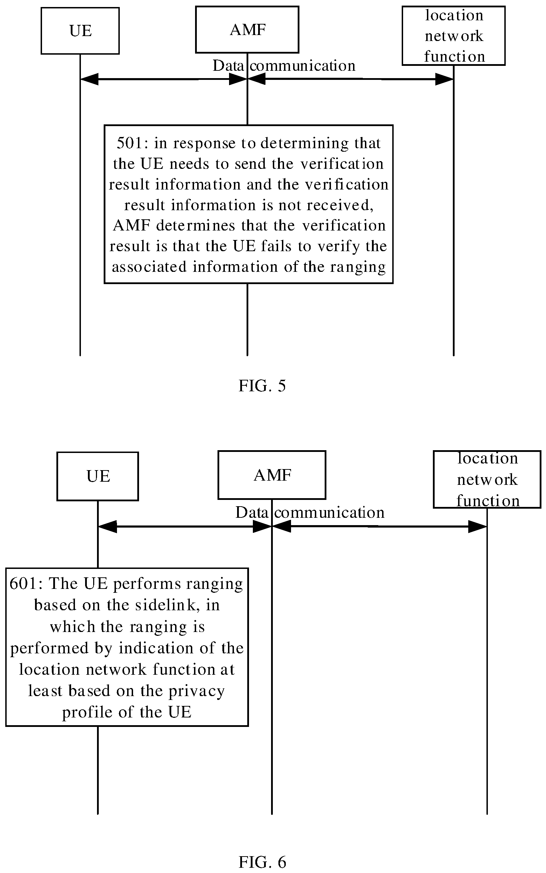

As shown in FIG. 5, this embodiment provides a ranging method that may be executed by the AMF of a cellular mobile communication system, the ranging method includes the following step.

Step 501: in response to determining that the UE needs to send the verification result information and the verification result information is not received, determining that the verification result is that the UE fails to verify the associated information of the ranging.

Step 501 may be implemented alone or in combination with step 401.

If the AMF instructs the UE to verify the associated information of the ranging, and determines that the UE needs to return the verification result information, then if the verification result information is not received within the expected reception period, the AMF may determine that the UE fails to verify the associated information of the ranging. The UE failing to verify the associated information of the ranging may include: the UE does not verify the associated information of the ranging, and/or the associated information of the ranging is not authorized by the UE.

In a possible implementation, the location network function determines whether the UE is allowed to perform the ranging at least based on the location information of the UE and the area range, and the verification result.

After the location network function determines the location information of the UE, it may determine whether the UE is in the area range where the ranging is allowed, and determine the verification result at the same time, and then determine whether the UE is allowed to perform the ranging.

Exemplarily, the location network function may determine that the UE is allowed to perform the ranging when the UE is in the area range in which the ranging is allowed and the verification result is successful.

In a possible implementation, the verification result returned by the UE also includes a timestamp.

The location network function determines whether the UE is allowed to perform the ranging based on the time range in which the ranging is allowed and the timestamp.

For example, if the timestamp is within the time range, the UE is allowed to perform the ranging, otherwise, the UE is not allowed to perform the ranging.

In an embodiment, the verification result information also includes time information, which is used to indicate the time when the UE is allowed and/or not allowed to perform the ranging.

Sending the response to the location information request to the location network function includes:
sending the response to the location information request carrying the time information to the location network function.

In a possible implementation, the time information is used to indicate the time when the UE is allowed and/or not allowed to perform the ranging after the current ranging.

The AMF may carry the time information in the response to the location information request and send it to the location network function. The location network function may determine the time when the UE is allowed and/or not allowed to perform the ranging.

In an embodiment, the providing, by the AMF, the service parameter for the ranging based on the sidelink, includes:
receiving, by the AMF, the second ranging request sent by the location network function, in which the second ranging request is determined by the location network function based on the privacy profile to allow the UE to perform the ranging;
instructing the UE to perform the ranging based on the second ranging request.

The location network function determines that the UE is allowed to perform the ranging based on the privacy profile (for example, the location network function determines that the positions of the two UEs allowed to perform the ranging are both within the respective areas where the ranging is allowed, and the UEs are both within the respective time ranges where the ranging is allowed), the location network function may send a second ranging request to the serving AMF, instruct the AMF to provide the ranging service based on the second ranging request. The serving AMF may be the AMF associated with the UE performing the ranging.

Here, the second ranging request may be the same as or different from the first ranging request. The second ranging request may indicate the UE performing the ranging, the required ranging result and other ranging requirements.

The serving AMF may forward the second ranging request to the UE via an NAS signaling. Here, the UE may be the UE associated with the ranging.

The UE performs the ranging based on the second ranging request. For example, the reference UE may initiate the ranging based on a sidelink to the target UE based on the second ranging request. The ranging process may include a ranging discovery and a service operation.

The reference UE may send the ranging result to the serving AMF. The serving AMF forwards the ranging result to the location network function. The location network function forwards the ranging result to the ranging request function, thereby completing the ranging.

Here, the ranging result may be the original measurement data such as the signal flight time obtained by the UE when measuring the signal, etc., or the calculation result of the distance, direction, position, etc. obtained after the original data is calculated.

As shown in FIG. 6, this embodiment provides a ranging method that may be executed by the UE of the cellular mobile communication system, the ranging method includes the following step.

Step 601: The UE performs the ranging based on the sidelink, in which the ranging is performed by the indication of the location network function at least based on the privacy profile of the UE.

The location network function (Location NF) may be a Gateway Mobile Location Center (GMLC) or a ranging/sidelink positioning management function (Ranging/SL positioning Management Function, RSMF) etc. The location network function may be responsible for verifying the privacy profile of the UE associated with the ranging and controlling the ranging, etc. The location network function may be an entity on the network side or a function on the network side, and the embodiments of the present disclosure do not limit this. In one implementation, the location network function may be a function in any entity on the network side or a new entity. In an embodiment of the present disclosure, the location network function may be implemented by a network element or an entity or a function on the current network side, so it should be considered that its name "location network function" is not a limitation on the function or the network element.

In a possible implementation, the ranging based on the sidelink may include: the ranging based on the signal on the PC5 port and/or SR5 port of the sidelink.

Here, the ranging may include but is not limited to at least one of: determining the distance between two or more UEs via the sidelink; determining the relative direction between one UE and another UE via the sidelink; determining the relative position between one UE and another UE via the sidelink. The ranging may also include sidelink positioning, that is, positioning the UE via the sidelink.

Exemplarily, the target UE may be ranged in combination with a plurality of UEs to determine the distance and/or direction value between the target UE and a plurality of UEs. The triangulation positioning method may also be used to determine the coordinates of the target UE through the ranging results of the plurality of UEs and the target UE to achieve sidelink positioning.

In this embodiment, unless otherwise specified, "ranging" may include at least one of: determining the distance between two or more UEs via the sidelink, determining the relative direction between one UE and another UE via the sidelink, determining the relative position between one UE and another UE via the sidelink, positioning the UE via the sidelink, etc. Among them, determining the relative direction between one UE and another UE via the sidelink and determining the relative position between one UE and another UE via the sidelink are often performed together.

In one possible implementation, the performing the ranging between a plurality of UEs to be measured based on the sidelink may be used to determine the distance and/or direction between N UEs to be measured in a plurality of UEs to be measured and other UEs in the plurality of UEs to be measured, and may also be used to determine the position of N UEs to be measured in the plurality of UEs to be measured, where N is a positive integer greater than or equal to 1 and less than or equal to the total number of UEs to be measured.

For example, UE and/or core network equipment (such as LMF, etc.) may determine the distance between UEs based on the flight time of the signal transmitted by PC5/SR5 ports between UEs. Further, the positioning of UEs at unknown positions may be achieved based on the relative positions between a plurality of UEs at known positions and UEs at unknown positions, that is, the positioning of UEs at unknown positions is achieved. Here, the position of the UE may include but is not limited to the geographic coordinate position of the UE, the relative position of the UE relative to a reference point (such as a base station or a UE at a known position), etc. This is not limited here.

The location network function may provide the service parameter for the ranging based on the first ranging request.

In a possible implementation, the ranging service parameter provided by the location network function include but are not limited to at least one of:
controlling whether the UE performs the ranging;
transmitting information during the ranging process;
determining the privacy profile of the UE;
performing operations associated with the privacy profile of the UE, such as determining whether the current situation meets the privacy profile requirements, etc.

In a possible implementation, the location network function may control the UE to perform the ranging through a core network element such as AMF.

Here, the UE associated with the first ranging request may be a UE associated with the ranging, and the UE associated with the ranging may include but are not limited to UEs participating in the ranging. The UE associated with the ranging may include but are not limited to at least one of: a reference UE, a target UE, an observer UE, a third-party UE, an assisting UE, etc.

The privacy profile may be used to indicate the privacy information of the UE associated with the ranging. The ranging behavior of the UE is limited.

In a possible implementation, the privacy profile of the UE may indicate the type of the ranging that the UE is allowed to perform, and/or the type of ranging that the UE is not allowed to perform.

The type of the ranging may be determined based on the number of UEs participating in the ranging. For example, the type of the ranging includes: the ranging of different numbers of UEs.

The type of the ranging may also be determined based on the ranging result of the ranging. For example, the types of the ranging may include ranging of relative distance measurement, ranging of relative direction measurement, ranging of UE positioning, etc.

In a possible implementation, the privacy profile of the UE may indicate the accuracy of ranging that the UE is allowed to perform, and/or the accuracy of ranging that the UE is not allowed to perform. In this embodiment of the present disclosure, the "accuracy of ranging that the UE is allowed to perform" may be specifically a value of accuracy, or an interval of accuracy. Based on the privacy profile of the UE, it may be determined what accuracy of positioning that the UE allows.

In a possible implementation, the privacy profile of the UE may be pre-stored in the core network. The privacy profile may be provided by the UE, or may be agreed upon between the UE and the network side, or may be specified by the communication protocol, or may be specified by the network operator.

In an embodiment, the privacy profile is used to indicate at least one of:
whether the ranging is allowed;
an area range in which the ranging is allowed; or
a time range in which the ranging is allowed.

In a possible implementation, the location network function determines that the privacy profile of the UE indicates that the UE is allowed to perform the ranging, and then continues the subsequent steps of the ranging, such as instructing the UE to perform the ranging. The location network function determines that the privacy profile of the UE may indicate that the UE is not allowed to perform the ranging, and then stops the subsequent steps of the ranging, such as not instructing the UE to perform the ranging or perform any operation.

In a possible implementation, whether the ranging is allowed may include whether the UE is authorized to perform the ranging.

The time range in which the ranging is allowed may be the time range in which the UE is allowed to perform the ranging, which includes at least one of: a start time, an end time, and duration for allowing the UE to perform the ranging.

In a possible implementation, the area range may include at least one of: the geographical range, the cell to which the UE belongs, and the coverage range of the base station to which the UE belongs.

In a possible implementation, the location network function provides ranging services within the time range in which the UE is allowed to perform the ranging, such as instructing the UE to perform the ranging within the time range in which the UE is allowed to perform the ranging.

In a possible implementation, there may be a plurality of UEs associated with the ranging, and the service parameter for the ranging may be provided based on the privacy profiles corresponding to the plurality of UEs.

Exemplarily, for the ranging performed by two UEs, the location network function may provide ranging services to the two UEs when the privacy profiles of the two UEs both indicate that the ranging is allowed, such as instructing the two UEs to perform the ranging.

The first ranging request may be sent by a first ranging requester. After receiving the first ranging request, the location network function may determine the UE for performing the ranging, and then provide ranging services based on the privacy profile of the UE. Among them, the first ranging requester may be either a UE, an access network, or a network element or a function of a core network.

The first ranging request may indicate the UE that needs to perform the ranging.

The location network function may instruct the AMF and other core network elements to provide ranging services based on the privacy profile of the UE, such as transmitting information in the ranging process, instructing the UE to perform the ranging, etc.

The UE may obtain the information required for the ranging based on the instructions of the location network function and perform the ranging.

In this way, the ranging via the sidelink is performed based on the privacy profile of the UE, and the privacy requirements of the UE may be met during the ranging process, thereby improving the security of the ranging.

In an embodiment, the privacy profile is located in the UDM corresponding to the UE.

Here, the first ranging request may be sent by the ranging request function to the location network function. When the application in the ranging request function has a ranging requirement, the ranging request function sends the first ranging request to the location network function.

In an embodiment, the ranging request function includes at least one of:
a core network function;
an application function (AF);
an entity.

When the ranging request function has a ranging requirement, the location network function may be determined based on the identity of the UE (such as SUPI). And the identity of the UE is carried in the first ranging request and sent to the location network function.

The privacy profile of the UE may be pre-stored in the UDM. The location network function may obtain the privacy profile from the UDM.

The location network function may query the privacy profile of the UE in the UDM.

In a possible implementation, the privacy profiles of a plurality of UEs performing the ranging may be stored in the same UDM, or the privacy profiles of the plurality of UEs performing the ranging may be stored in different UDMs, or the privacy profiles of the plurality of UEs performing the ranging may be stored in completely different UDMs.

In a possible implementation, the first ranging request from the ranging request function to the location network function may include at least one of: the identity of the UE that needs to perform the ranging, the ranging result (distance and/or angle) and the required quality of service (QoS).

The location network function may obtain the privacy profile of each UE from the UDM corresponding to each UE. Whether to provide the ranging service is determined based on the privacy profile of each UE.

In a possible implementation, the location network function determines whether to allow the ranging request function to request the UE to perform the ranging;

In response to determining that the ranging request function is allowed to request the UE to perform the ranging, the location network function determines the service parameters of the ranging at least based on the privacy profile of the UE related to the first ranging request.

The location network function may determine whether the ranging request function is authorized to provide ranging service to the UE performing the ranging in the first ranging request. If the ranging request function is authorized to provide ranging service to the UE, the location network function provides ranging service based on the privacy profile of the UE indicating to perform the ranging in the first ranging request.

In a possible implementation, the location network function determines the UDM corresponding to the UE based on the identity of the UE carried in the first ranging request; the location network function obtains the privacy profile of the UE from the UDM corresponding to the UE.

The first ranging request may carry the identity of the UE. The identity of the UE may include SUPI. The location network function may determine the UDM based on the identity of the UE.

The location network function may call the Nudm_SDM_Get service operation from the UDM corresponding to the UE to obtain the privacy profile of the UE. The UDM returns the privacy profile of the UE. The location network function may check the privacy profile of the UE. If at least one of the UEs is not allowed to perform the ranging, the service parameter for the ranging are stopped.

If the privacy profile indicates the area range in which the ranging is allowed, the location network function needs to determine whether the current location of the UE belongs to the area range. If the location network function determines that the current location of the UE belongs to the area range, the UE may be allowed to perform the ranging. If the location network function determines that the current location of the UE does not belong to the area range, the UE is not allowed to perform the ranging.

In a possible implementation, the location network function needs to determine the locations of all UEs participating in the ranging, and determine whether each UE is located in the area range in which each UE is allowed to perform the ranging.

The location network function may send location information request to the AMF of each UE to request to obtain the location information of the UE.

Exemplarily, the location network function may call the Nudm_UECM_Get service operation from the UDM corresponding to the UE. UDM may return the network address of AMF to which the UE currently serves.

Exemplarily, the location network function may call the Namf_Location_ProvideLocationInfo service operation from the AMF to request the location information of the UE provided by the network.

Here, the location information may include at least one of: the geographical location of the UE, the cell where the UE is located, and the base station to which the UE belongs.

In a possible implementation, the location information may be stored in the AMF during historical positioning, UE access, cell handover, etc.

In a possible implementation, the AMFs of a plurality of UEs performing the ranging may be the same, or the AMFs of the plurality of UEs performing the ranging may be completely different, or the AMFs of the plurality of UEs performing the ranging may not be completely the same.

The AMF may return a response to the location information request to the location network function, and the response to the location information request may carry the location information of the UE.

Exemplarily, the AMF returns a Namf_Location_ProvideLocationInfo response to the location network function to return the location of the UE provided by the network.

After the location network function determines the location information of the UE, it may determine whether the UE is in the area range in which the ranging is allowed, and then determine whether the UE is allowed to perform the ranging.

In an embodiment, the location information request further includes a UE verification indication, which is used to indicate at least one of:
associated information of the ranging;
whether to indicate associated information of the ranging to the UE; or
whether to verify associated information of the ranging by the UE;
in which the UE verification indication is set by the location network function based on the privacy profile.

The location network function may determine the UE verification indication based on the privacy profile. The privacy profile may indicate the information carried by the UE verification indication. The location network function may carry the UE verification indication in the location information request to indicate to the AMF the associated information of the ranging that needs to be verified by the UE.

The associated information of the ranging may be used to indicate the requester of the ranging, etc.

In an embodiment, the associated information of the ranging includes at least one of:
an application identifier of an application requesting the ranging;
a type of the ranging.

The ranging may be initiated by the application in the ranging request function, and the location network function may send the application identifier of the application to the AMF.

The location network function may instruct the AMF to send the associated information of the ranging to the UE.

The location network function may also indicate to the AMF that the associated information of the ranging is verified by the UE.

Exemplarily, the location network function may indicate to the AMF the application identifier of the application requesting the ranging, which is sent by the AMF to the UE for verification to determine whether the application is authorized by the UE to request the ranging.

In one possible implementation, the location network function may instruct the AMF not to send associated information to the UE. For example, the location network function indicates that there is no need to send associated information to the UE and the UE does not need to verify the associated information, instructing the AMF not to send associated information to the UE.

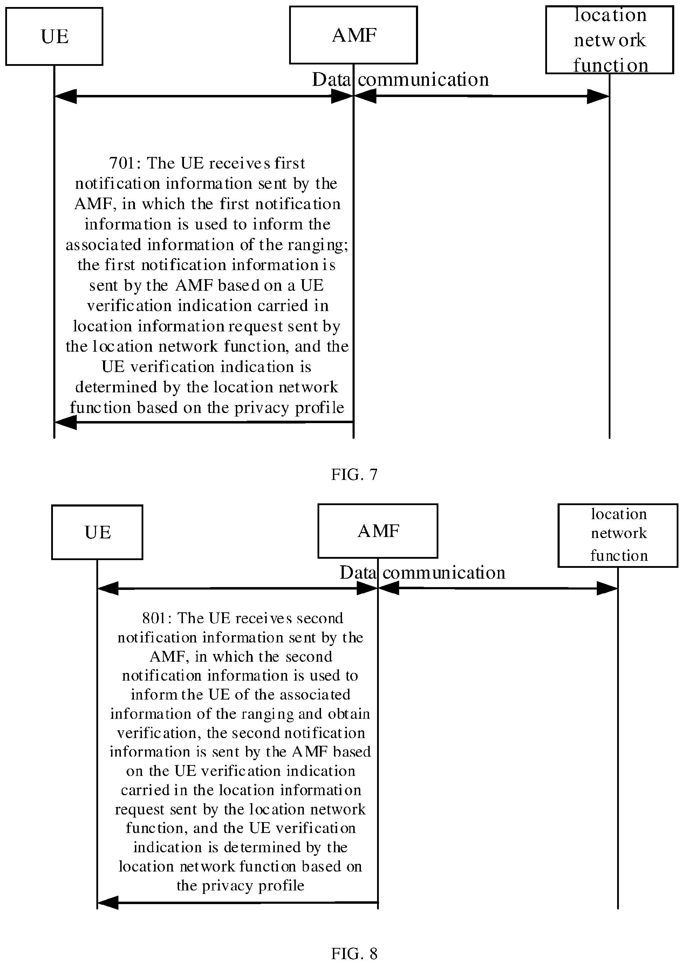

As shown in FIG. 7, an embodiment of the present disclosure provides a ranging method that may be executed by a UE of a cellular mobile communication system, the ranging method includes the following step.

Step 701: The UE receives first notification information sent by the AMF, in which the first notification information is used to notify associated information of the ranging; the first notification information is sent by the AMF based on a UE verification indication carried in location information request sent by the location network function, and the UE verification indication is determined by the location network function based on the privacy profile.

Step 701 may be implemented alone or in combination with step 601.

In one possible implementation, the location network function may instruct the AMF to indicate that the associated information of the ranging is sent to the UE, but the UE does not need to verify it. Then, the AMF may carry the associated information of the ranging in the first notification information and send it to the UE after receiving the associated information of the ranging.

As shown in FIG. 8, an embodiment of the present disclosure provides a ranging method that may be executed by the UE of the cellular mobile communication system, the ranging method includes the following step.

Step 801: The UE receives second notification information sent by the AMF, in which the second notification information is used to inform the UE of the associated information of the ranging and obtain verification, in which the second notification information is sent by the AMF based on the UE verification indication carried in the location information request sent by the location network function, in which the UE verification indication is determined by the location network function based on the privacy profile.

Step 801 may be implemented alone or in combination with step 601 and/or step 701.

In one possible implementation, the location network function may instruct the AMF to indicate that the associated information of the ranging is sent to the UE, and the UE needs to verify it. Then, after receiving the associated information of the ranging, the AMF may instruct the UE to verify the associated information of the ranging through the second notification information. The second notification information may simultaneously indicate the associated information of the ranging to the UE, and instruct the UE to verify the associated information of the ranging. The first notification information and the second notification information may be the same signaling.

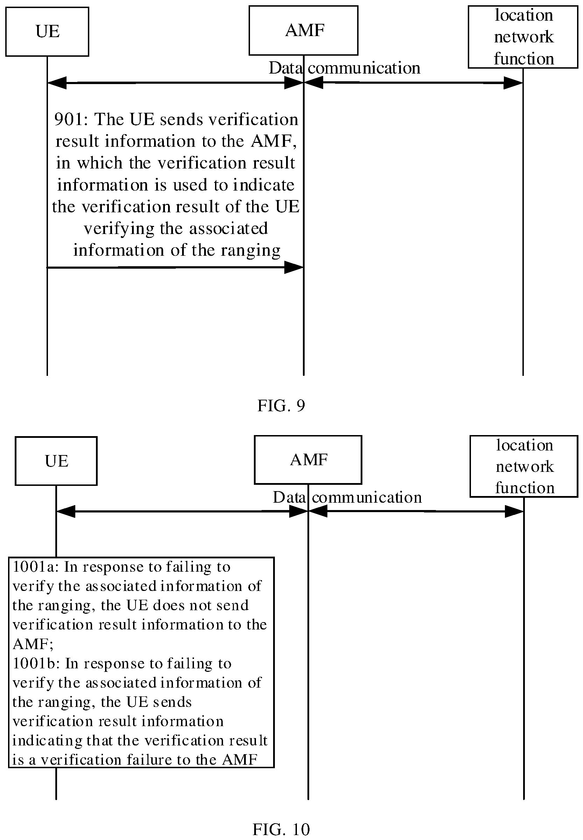

As shown in FIG. 9, an embodiment of the present disclosure provides a ranging method that may be executed by the UE of the cellular mobile communication system, the ranging method includes the following step.

Step 901: The UE sends verification result information to the AMF, in which the verification result information is used to indicate the verification result of the UE verifying the associated information of the ranging.

Step 801 may be implemented alone or in combination with step 601, step 701 and/or step 801.

In one possible implementation, the verification result may include verification success or verification failure.

AMF may send the verification result determined by the UE to the location network function.

Exemplarily, the AMF may return a Namf_Location_ProvideLocationInfo response to the location network function to return the location of the UE provided by the network, and include the verification result.

In an embodiment, the verification result information also includes time information for indicating the time when the UE is allowed and/or not allowed to perform the ranging. In one possible implementation, the time information is used to indicate the time when the UE is allowed and/or not allowed to perform the ranging after the current ranging.

The AMF may carry the time information in the response to the location information request and send it to the location network function. The location network function may determine the time when the UE allows and/or does not allow the ranging.

As shown in FIG. 10, an embodiment of the present disclosure provides a ranging method that may be executed by a UE of a cellular mobile communication system, the ranging method includes one of the following steps.

Step 1001a: In response to failing to verify the associated information of the ranging, the UE does not send verification result information to the AMF;
Step 1001b: In response to failing to verify the associated information of the ranging, the UE sends verification result information indicating that the verification result is a verification failure to the AMF.

Step 1001 may be implemented alone or in combination with step 601, step 701, step 801 and/or step 901.

In a possible implementation, the location network function may instruct the AMF to indicate the sending of the associated information of the ranging to the UE, and the UE needs to verify it. Then, after receiving the associated information of the ranging, the AMF may instruct the UE to verify the associated information of the ranging through the second notification information. The second notification information may simultaneously indicate the associated information of the ranging to the UE, and instruct the UE to verify the associated information of the ranging. The first notification information and the second notification information may be the same signaling.

The UE may verify the associated information of the ranging, and send the verification result to the AMF.

In one possible implementation, the verification result may include verification success or verification failure.

The AMF may send the verification result determined by the UE to the location network function.

Exemplarily, the AMF may return a Namf_Location_ProvideLocationInfo response to the location network function to return the location of the UE provided by the network and include the verification result.

If the AMF instructs the UE to verify the associated information of the ranging and determines that the UE needs to return the verification result information, then if the verification result information is not received within an expected reception period, the AMF may determine that the UE fails to verify the associated information of the ranging. The failure of the UE to verify the associated information of the ranging may include: the UE does not verify the associated information of the ranging, and/or the associated information of the ranging is not authorized by the UE.

In one possible implementation, the location network function determines whether the UE is allowed to perform the ranging at least based on the location information of the UE and the area range, as well as the verification result.

After the location network function determines the location information of the UE, it may determine whether the UE is in the area range where the ranging is allowed, and at the same time determine the verification result, and then determine whether the UE is allowed to perform the ranging.

Exemplarily, the location network function may determine that the UE is allowed to perform the ranging when the UE is in an area range where the ranging is allowed and the verification result is successful.

In a possible implementation, the verification result returned by the UE also includes a timestamp.

The location network function determines whether the UE is allowed to perform the ranging based on the time range where the ranging is allowed and the timestamp.

For example, if the timestamp is within the time range, the UE is allowed to perform the ranging, otherwise, the UE is not allowed to perform the ranging.

In an embodiment, the UE is instructed by a second ranging request sent by the location network function and received by the AMF, to perform the ranging, and the second ranging request is sent by the location network function upon determining to allow the UE to perform the ranging based on the privacy profile.

The location network function determines that the UE is allowed to perform the ranging based on the privacy profile (for example, the location network function determines that the positions of the two UEs that are allowed to perform the ranging based on the privacy profile are both within the respective area ranges where the ranging is allowed, and the UEs are both within the respective time ranges where the ranging is allowed). The location network function may send a second ranging request to the serving AMF, instructing the AMF to provide the ranging services based on the second ranging request. The serving AMF may be the AMF associated with the UE performing the ranging.

Here, the second ranging request may be the same as or different from the first ranging request. The second ranging request may indicate the UE performing the ranging, the required ranging result and other ranging requirements.

The serving AMF may forward the second ranging request to the UE through NAS signaling. Here, the UE may be a UE associated with the ranging.

The UE performs the ranging based on the second ranging request. For example, the reference UE may initiate the ranging based on the sidelink to the target UE based on the second ranging request. The ranging process may include ranging discovery and service operations.

The reference UE may send the ranging result to the serving AMF. The serving AMF forwards the ranging result to the location network function. The location network function forwards the ranging result to the ranging request function, thereby completing the ranging.

Here, the ranging result may be the original measurement data such as the signal flight time obtained by the UE when measuring the signal, etc., or the calculation result of the distance, direction, position, etc. obtained after the original data is processed.

The following provides a specific example in combination with any of the above embodiments:
assuming that UE1 is managed by AMF1 and UDM1, and UE2 is managed by AMF2 and UDM2. If UE1 and UE2 are served by the same network function, AMF or UDM is not distinguished, that is, AMF1 is the same as AMF2 or UDM1 is the same as UDM2.

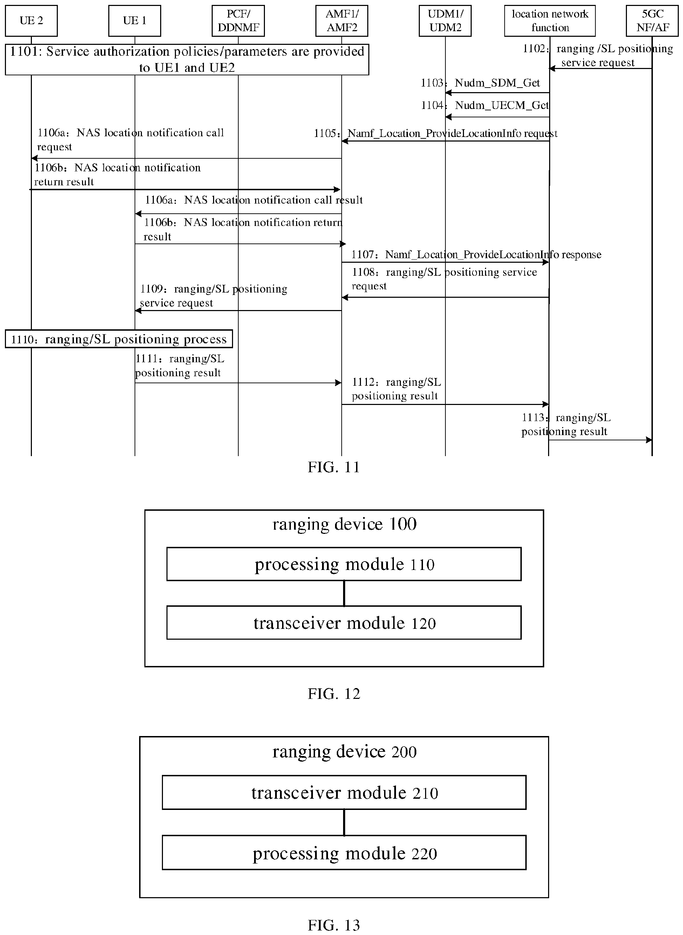

As shown in FIG. 11, the location network function (Location NF) may be a Gateway Mobile Location Center (GMLC) or a Ranging /SL positioning Management Function (RSMF), etc. RSMF is responsible for verifying the privacy profile of the UE for the ranging and forwarding the ranging request to the serving AMF, etc. The ranging method specifically includes the following steps.

Step 1101: Service authorization policies/parameters are provided to UE1 and UE2.

Step 1102: 5GCNF/AF (through the location network function) sends a ranging /SL positioning service request (i.e., the first ranging request) to the corresponding location network function. If 5GC NF is a location network function, this step is skipped.

UE1 may be a target UE or a reference UE, which may be determined in the 5GC NF/AF request or in step 1110.

5GC NF selects the location network function based on the SUPI of the UE. Upon receiving the ranging/SL location service request containing the identity of the UE (e.g., SUPI), the location network function identifies the network to which the UE belongs and initiates the authorization process with the UDM of UE1/UE2.

Step 1103: The location network function calls the Nudm_SDM_Get service operation from the UDM of UE1/UE2 to obtain the privacy profile of the UE. The UDM returns the privacy profiles of UE1/UE2. The location network function then checks the UE ranging privacy. If both UE1 and UE2 do not authorize ranging/SL positioning, or one of UE1 and UE2 does not authorize ranging/SL positioning, steps 1104-1112 are skipped.

If UE1 and UE2 are managed by different UDMs, the location network function shall send Nudm_SDM_Get messages to the corresponding UDMs, respectively.

Step 1104: The location network function calls the Nudm_UECM_Get service operation from the UDM of UE1/UE2. The UDM returns the network address of the AMF to which the UE1/UE2 currently serve.

Step 1105: If any UE is granted restricted permission in a certain area (i.e., the area range in which the ranging is allowed), the location network function calls the Namf_Location_ProvideLocationInfo service operation from the AMF (i.e., sending a location information request to the UDM) to request the location of the UE provided by the network. The location information request may also carry the privacy check result (UE verification indication) in step 1103, which may include an indication of the identity code of the application and privacy-related actions provided by the AMF (i.e., no action (no need to notify the UE of the identity code of the application), notification (the identity code of the application needs to be notified to the UE), notification and privacy verification, etc. (the identity code of the application needs to be notified to the UE, and the UE is required to verify the identity code of the application)).

Step 1106a: If the indicator of the privacy check-related operation (UE verification indication) indicates that the UE must be notified of the associated information or the UE must be notified for privacy verification and if the UE supports the ranging notification (according to the UE capability information), the AMF sends a notification call information to UE1/UE2: NAS location notification call request (second notification information), indicating the identity code of the application and whether privacy verification is required.

Step 1106b: UE1/UE2 returns the notification result to AMF: NAS location notification return result (verification result information), indicating whether the privacy verification is passed, and whether the current ranging request is allowed or rejected. If the UE does not respond after a predetermined time period, AMF returns an error response to the location network function, and the error response contains a "no response" parameter.

The notification result may also include a Ranging Privacy Indication (i.e., time information); that is, whether UE1/UE2 allows subsequent ranging requests (if generated). The ranging privacy indication may also indicate the time point when subsequent ranging requests are not allowed.

Step 1107: AMF returns a Namf_Location_ProvideLocationInfo response (i.e., response to the location information request) to the location network function to return the location of the UE provided by the network. The response to the location information request includes a ranging privacy indication.

Step 1108: The location network function checks whether UE1/UE2 is in the area where the Ranging service is allowed based on the location of UE1/UE2 provided by the network. If the location and time provided by the network meet the privacy requirements, the location network function forwards the ranging/SL positioning service request (second ranging request) to the serving AMF.

Step 1109: AMF forwards the ranging/SL positioning service request to UE1 via an NAS signaling.

Step 11010: UE1 initiates the ranging/SL positioning process to UE2 to perform measurements and result calculations. The ranging/SL positioning process includes ranging/SL positioning discovery and service operations.

Step 11011: UE1 sends the ranging/SL positioning result (ranging result) to AMF.

Step 11012: AMF forwards the ranging/SL positioning result to the location network function.

Step 11013: The location network function forwards the ranging/SL positioning result to the 5GC NF/AF.

An embodiment of the present invention also provides a ranging device, as shown in FIG. 12, which is applied to the location network function of cellular mobile wireless communication, the device 100 includes a processing module 110.

The processing module 110 is configured to determine a service parameter for ranging at least based on a privacy profile of a UE related to a first ranging request; in which the first ranging request is a request for performing the ranging via a sidelink.

In an embodiment, the privacy profile is used to indicate at least one of:
whether the ranging is allowed;
an area range in which the ranging is allowed; or
a time range in which the ranging is allowed.

In an embodiment, the ranging device further includes a transceiver module 120, configured to:
receive the first ranging request sent by a ranging request function;
obtain the privacy profile of the UE from a unified data management (UDM) based on the first ranging request;
determine whether to provide the service parameter for the ranging based on the privacy profile.

In an embodiment, the processing module 110 is further configured to:
determine whether the ranging request function is allowed to request the UE to perform the ranging;
in response to determining that the ranging request function is allowed to request the UE to perform the ranging, determine the service parameter for the ranging at least based on the privacy profile of the UE related to the first ranging request.

In an embodiment, the first ranging request carries an identity of the UE; the location network function is determined by the ranging request function based on the identity of the UE.

In an embodiment, the processing module 110 is further configured to:
determine the UDM corresponding to the UE based on the identity of the UE carried in the first ranging request;
obtain the privacy profile of the UE from the UDM corresponding to the UE.

In an embodiment, the transceiver module 120 is further configured to:
in response to the privacy profile indicating the area range in which the ranging is allowed, send location information request to an access and mobility management function (AMF) of the UE, in which the location information request is used to request location information of the UE from the AMF;
receive a response to the location information request sent by the AMF based on the location information request, in which the response to the location information request includes the location information of the UE;
the processing module 110 is further configured to determine whether the UE is allowed to perform the ranging at least based on the location information of the UE and the area range.

In an embodiment, the location information request further includes a UE verification indication, and the UE verification indication is used to indicate at least one of:
associated information of the ranging;
whether to indicate associated information of the ranging to the UE; or
whether to verify associated information of the ranging by the UE;
in which the UE verification indication is set by the location network function based on the privacy profile.

In an embodiment, the associated information of the ranging includes at least one of:
an application identifier of an application requesting to perform the ranging; or
a type of the ranging.

In an embodiment, the response to the location information request further includes: a verification result of the UE verifying the associated information.

In an embodiment, the processing module 110 is further configured to:
determine whether to allow the UE to perform the ranging at least based on the location information of the UE and the area range, and the verification result.

In an embodiment, the response to the location information request further includes time information for indicating a time when the UE is allowed and/or not allowed to perform the ranging.

In an embodiment, the transceiver module 120 is further configured to:
in response to determining that the UE is allowed to perform the ranging based on the privacy profile, send a second ranging request to the AMF of the UE, in which the second ranging request is used to instruct the UE to perform the ranging.

In an embodiment, the ranging request function includes at least one of:
a core network function;
an application function (AF); or
an entity.

An embodiment of the present disclosure also provides a ranging device, as shown in FIG. 13, which is applied to the AMF of cellular mobile wireless communication, the ranging device 200 includes a transceiver module 210.

The transceiver module 210 is configured to provide a service parameter for ranging based on a sidelink, in which the service parameter for the ranging is determined by a location network function at least based on a privacy profile of a UE associated with the ranging.

In an embodiment, the privacy profile is used to indicate at least one of:
whether the ranging is allowed;
an area range in which the ranging is allowed; or
a time range in which the ranging is allowed.

In an embodiment, the privacy profile is located in a unified data management (UDM) of the UE.

In an embodiment, the providing the service parameter for the ranging based on the sidelink includes:
the transceiver module 210 is further configured to receive location information request sent by the location network function, in which the location information request is used to request location information of the UE from the AMF;
the transceiver module 210 is further configured to send a response to the location information request to the location network function, in which the response to the location information request includes the location information of the UE, the location information of the UE is used for the location network function to determine whether to allow the UE to perform the ranging in combination with the area range.

In an embodiment, the location information request further includes a UE verification indication, and the UE verification indication is used to indicate at least one of:
associated information of the ranging;
whether to indicate associated information of the ranging to the UE; or
whether to verify associated information of the ranging by the UE;
in which the UE verification indication is set by the location network function based on the privacy profile.

In an embodiment, the associated information of the ranging includes at least one of:
an application identifier of an application requesting to perform the ranging; or
a type of the ranging.

In an embodiment, the transceiver module 210 is further configured to:
in response to the UE verification indication indicating that the associated information of the ranging needs to be indicated to the UE, send first notification information to the UE, in which the first notification information is used to indicate the associated information of the ranging.

In an embodiment, the transceiver module 210 is further configured to:
in response to the UE verification indication indicating that the associated information of the ranging is to be verified by the UE, send second notification information to the UE, in which the second notification information is used to indicate that the associated information of the ranging needs to be verified by the UE;
receive verification result information sent by the UE in response to the second notification information, in which the verification result information is used to indicate a verification result of the UE verifying the associated information of the ranging.

The transceiver module 210 is further configured to: send the response to the location information request carrying the verification result to the location network function.

In an embodiment, the ranging device further includes a processing module 220, configured to:
in response to determining that the UE needs to send the verification result information and the verification result information is not received, determine that the verification result is that the UE fails to verify the associated information of the ranging.

In an embodiment, the verification result information further includes time information for indicating a time when the UE allows and/or does not allow to perform the ranging;
the transceiver module 210 is further configured to:
send the response to the location information request carrying the time information to the location network function.

In an embodiment, the transceiver module 210 is further configured to:
receive a second ranging request sent by the location network function, in which the second ranging request is sent by the location network function based on the privacy profile to allow the UE to perform the ranging;
instruct the UE to perform the ranging based on the second ranging request.

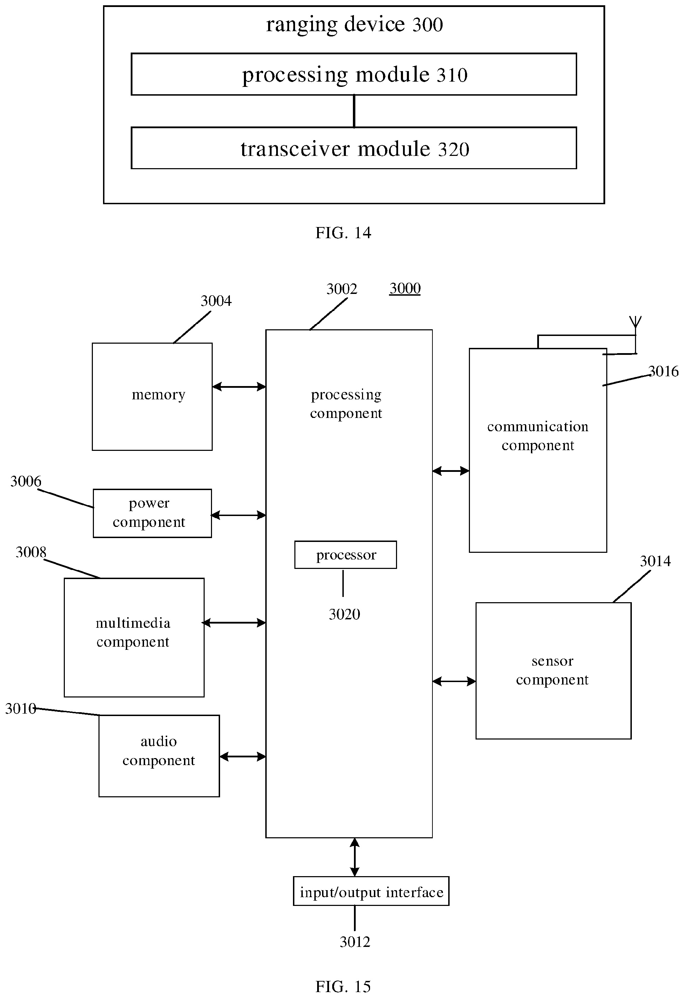

An embodiment of the present invention also provides a ranging device, as shown in FIG. 14, which is applied to a UE of cellular mobile wireless communication, the ranging device 300 includes a processing module 310.

The processing module 310 is configured to perform ranging based on a sidelink, in which the ranging is performed by a location network function at least based on a privacy profile of a UE.

In an embodiment, the privacy profile is used to indicate at least one of:
whether the ranging is allowed;
an area range in which the ranging is allowed; or
a time range in which the ranging is allowed.

In an embodiment, the privacy profile is located in a UDM corresponding to the UE.

In an embodiment, the ranging device further includes a transceiver module 320, configured to:
receive first notification information sent by an access and mobility management function (AMF), in which the first notification information is used to notify associated information of the ranging; the first notification information is sent by the AMF based on a UE verification indication carried in location information request sent by the location network function, and the UE verification indication is determined by the location network function based on the privacy profile.

In an embodiment, the ranging device further includes a transceiver module 320, configured to:
receive second notification information sent by the AMF, in which the second notification information is used to notify the UE of associated information of the ranging and to obtain a verification, the second notification information is sent by the AMF based on a UE verification indication carried in location information request sent by the location network function, and the UE verification indication is determined by the location network function based on the privacy profile.

In an embodiment, the transceiver module 320 is further configured to:
send verification result information to the AMF, in which the verification result information is used to indicate a verification result of the UE verifying the associated information of the ranging.

In an embodiment, the verification result information further includes time information for indicating a time when the UE is allowed and/or not allowed to perform the ranging.

In an embodiment, the transceiver module 320 is further configured to:
in response to failing to verify the associated information of the ranging, not send the verification result information to the AMF;
in response to failing to verify the associated information of the ranging, send the verification result information indicating that the verification result is a verification failure to the AMF.

In an embodiment, the location information request further includes a UE verification indication, and the UE verification indication is used to indicate at least one of:
associated information of the ranging;
whether to indicate associated information of the ranging to the UE; or
whether to verify associated information of the ranging by the UE;
in which the UE verification indication is set by the location network function based on the privacy profile.

In an embodiment, the associated information of the ranging includes at least one of:
an application identifier of an application requesting to perform the ranging; or
a type of the ranging.

In an embodiment, the UE is instructed by a second ranging request sent by the location network function and received by the AMF, to perform the ranging, and the second ranging request is sent by the location network function upon determining to allow the UE to perform the ranging based on the privacy profile.

In an embodiment, the processing module 110, the transceiver module 120, the transceiver module 210, the processing module 220, the processing module 310 and the transceiver module 320 may be implemented by one or more central processing units (CPUs), graphics processing units (GPUs), baseband processors (BPs), application specific integrated circuits (ASICs), DSPs, programmable logic devices (PLDs), complex programmable logic devices (CPLDs), field-programmable gate arrays (FPGAs), general-purpose processors, controllers, microcontrollers (MCUs), microprocessors, or other electronic components to perform the aforementioned methods.

FIG. 15 is a block diagram of a device 3000 for the ranging according to an embodiment. For example, the device 3000 may be a mobile phone, a computer, a digital broadcast terminal, a message transmission device, a game console, a tablet device, a medical device, a fitness device, a personal digital assistant, etc.

Referring to FIG. 15, the device 3000 may include one or more of the following components: a processing component 3002, a memory 3004, a power component 3006, a multimedia component 3008, an audio component 3010, an input/output (I/O) interface 3012, a sensor component 3014, and a communication component 3016.

The processing component 3002 generally controls the overall operation of the device 3000, such as operations associated with display, phone calls, data communications, camera operations, and recording operations. The processing component 3002 may include one or more processors 3020 to execute instructions to complete all or part of the steps of the above methods. In addition, the processing component 3002 may include one or more modules to facilitate interaction between the processing component 3002 and other components. For example, the processing component 3002 may include a multimedia module to facilitate interaction between the multimedia component 3008 and the processing component 3002.

The memory 3004 is configured to store various types of data to support operations on the device 3000. Examples of such data include instructions for any application or method operating on the device 3000, contact data, phone book data, messages, pictures, videos, etc. The memory 3004 may be implemented by any type of volatile or non-volatile storage device or a combination thereof, such as static random access memory (SRAM), electrically erasable programmable read-only memory (EEPROM), erasable programmable read-only memory (EPROM), programmable read-only memory (PROM), read-only memory (ROM), magnetic memory, flash memory, magnetic disk, or optical disk.

The power component 3006 provides power to various components of the device 3000. The power component 3006 may include a power management system, one or more power supplies, and other components associated with generating, managing, and distributing power for the device 3000.

The multimedia component 3008 includes a screen that provides an output interface between the device 3000 and the user. In some embodiments, the screen may include a liquid crystal display (LCD) and a touch panel (TP). If the screen includes a touch panel, the screen may be implemented as a touch screen to receive input signals from a user. The touch panel includes one or more touch sensors to sense touch, slide, and gestures on the touch panel. The touch sensor may not only sense the boundaries of a touch or slide action, but also detect the duration and pressure associated with the touch or slide operation. In some embodiments, the multimedia component 3008 includes a front camera and/or a rear camera. When the device 3000 is in an operating mode, such as a shooting mode or a video mode, the front camera and/or the rear camera may receive external multimedia data. Each front camera and rear camera may be a fixed optical lens system or have focal length and optical zoom capabilities.

The audio component 3010 is configured to output and/or input audio signals. For example, the audio component 3010 includes a microphone (MIC), and when the device 3000 is in an operating mode, such as a call mode, a recording mode, and a voice recognition mode, the microphone is configured to receive an external audio signal. The received audio signal may be further stored in the memory 3004 or sent via the communication component 3016. In some embodiments, the audio component 3010 also includes a speaker for outputting audio signals.

The I/O interface 3012 provides an interface between the processing component 3002 and the peripheral interface module, which may be a keyboard, a click wheel, a button, etc. These buttons may include, but are not limited to, a home button, a volume button, a start button, and a lock button.

The sensor component 3014 includes one or more sensors for providing various aspects of status assessment for the device 3000. For example, the sensor component 3014 may detect the on/off state of the device 3000, the relative positioning of components, such as the display and keypad of the device 3000, the sensor component 3014 may also detect the position change of the device 3000 or a component of the device 3000, the presence or absence of user contact with the device 3000, the orientation or acceleration/deceleration of the device 3000, and the temperature change of the device 3000. The sensor component 3014 may include a proximity sensor configured to detect the presence of a nearby object without any physical contact. The sensor component 3014 may also include a light sensor, such as a CMOS or CCD image sensor, for use in imaging applications. In some embodiments, the sensor component 3014 may also include an acceleration sensor, a gyroscope sensor, a magnetic sensor, a pressure sensor, or a temperature sensor.

The communication component 3016 is configured to facilitate wired or wireless communication between the device 3000 and other devices. The device 3000 may access a wireless network based on a communication standard, such as Wi-Fi, 2G or 3G, or a combination thereof. In an embodiment, the communication component 3016 receives a broadcast signal or broadcast-related information from an external broadcast management system via a broadcast channel. In an embodiment, the communication component 3016 also includes a near field communication (NFC) module to facilitate short-range communication. For example, the NFC module may be implemented based on radio frequency identification (RFID) technology, infrared data association (IrDA) technology, ultra-wideband (UWB) technology, Bluetooth (BT) technology, and other technologies.

In an embodiment, the device 3000 may be implemented by one or more application-specific integrated circuits (ASICs), digital signal processors (DSPs), digital signal processing devices (DSPDs), programmable logic devices (PLDs), field programmable gate arrays (FPGAs), controllers, microcontrollers, microprocessors, or other electronic components to perform the above methods.

In an embodiment, a non-transitory computer-readable storage medium including instructions is also provided, such as a memory 3004 including instructions, and the above instructions may be executed by the processor 3020 of the device 3000 to complete the above methods. For example, the non-transitory computer-readable storage medium may be a ROM, a random access memory (RAM), a CD-ROM, a tape, a floppy disk, and an optical data storage device, etc.

Those skilled in the art will readily appreciate other implementations of the present disclosure after considering the specification and practicing the present disclosure. This application is intended to cover any variations, uses or adaptations of the present disclosure, which follow the general principles of the present disclosure and include common knowledge or customary technical means in the art that are not disclosed in the present disclosure. The specification and embodiments are to be considered exemplary only, and the true scope and spirit of the present disclosure are defined by the appended claims.

It should be understood that the present disclosure is not limited to the exact structures that have been described above and shown in the drawings, and that various modifications and changes may be made without departing from the scope thereof. The scope of the present disclosure is limited only by the appended claims.

## Claims

1. A ranging method, performed by a location network function, comprising:
determining a service parameter for ranging at least based on a privacy profile of a user equipment (UE) related to a first ranging request; wherein the first ranging request is a request for performing the ranging through a sidelink.

2. The ranging method according to claim 1, wherein the privacy profile indicates at least one of:
whether the ranging is allowed;
an area range in which the ranging is allowed; or
a time range in which the ranging is allowed.

3. The ranging method according to claim 2, wherein determining the service parameter for the ranging at least based on the privacy profile of the UE related to the first ranging request comprises:
receiving the first ranging request sent by a ranging request function;
obtaining the privacy profile of the UE from a unified data management (UDM) based on the first ranging request;
determining whether to provide the service parameter for the ranging based on the privacy profile.

4. The ranging method according to claim 3, further comprising:
determining whether the ranging request function is allowed to request the UE to perform the ranging;
in response to determining that the ranging request function is allowed to request the UE to perform the ranging, determining the service parameter for the ranging at least based on the privacy profile of the UE related to the first ranging request.

5. The ranging method according to claim 3, wherein the first ranging request carries an identity of the UE; the location network function is determined by the ranging request function based on the identity of the UE.

6. The ranging method according to claim 3, wherein obtaining the privacy profile of the UE from the UDM based on the first ranging request comprises:
determining the UDM corresponding to the UE based on the identity of the UE carried in the first ranging request;
obtaining the privacy profile of the UE from the UDM corresponding to the UE.

7. The ranging method according to claim 3, wherein determining the service parameter for the ranging at least based on the privacy profile of the UE related to the first ranging request comprises:
in response to the privacy profile indicating the area range in which the ranging is allowed, sending location request information to an access and mobility management function (AMF) of the UE, wherein the location request information is used to request location information of the UE from the AMF;
receiving a response to the location request sent by the AMF based on the location request information, wherein the response comprises the location information of the UE;
determining whether the UE is allowed to perform the ranging at least based on the location information of the UE and the area range.

8. The ranging method according to claim 7, wherein the location request information further comprises a UE verification indication, and the UE verification indication is used to indicate at least one of:
associated information of the ranging;
whether to indicate associated information of the ranging to the UE; or
whether to verify associated information of the ranging by the UE;
wherein the UE verification indication is set by the location network function based on the privacy profile.

9. The ranging method according to claim 8, wherein the associated information of the ranging comprises at least one of:
an application identifier of an application requesting to perform the ranging; or
a type of the ranging.

10. The ranging method according to claim 8, wherein
the response further comprises: a verification result of the UE verifying the associated information.

11. The ranging method according to claim 10, wherein determining whether to allow the UE to perform the ranging at least based on the location information of the UE and the area range comprises:
determining whether to allow the UE to perform the ranging at least based on the location information of the UE and the area range, and the verification result.

12. The ranging method according to claim 7, wherein
the response to the location request further comprises time information for indicating a time when the UE is allowed and/or not allowed to perform the ranging.

13. The ranging method according to any one of claims 3 to 12, wherein determining the service parameter for the ranging at least based on the privacy profile of the UE related to the first ranging request comprises:
in response to determining that the UE is allowed to perform the ranging based on the privacy profile, sending a second ranging request to the AMF of the UE, wherein the second ranging request is used to instruct the UE to perform the ranging.

14. The ranging method according to any one of claims 3 to 12, wherein the ranging request function comprises at least one of:
a core network function;
an application function (AF); or
an entity.

15. A ranging method, performed by an access and mobility management function (AMF), comprising: providing a service parameter for ranging based on a sidelink, wherein the service parameter for the ranging is determined by a location network function at least based on a privacy profile of a user equipment (UE) associated with the ranging.

16. The ranging method according to claim 15, wherein the privacy profile indicates at least one of:
whether the ranging is allowed;
an area range in which the ranging is allowed; or
a time range in which the ranging is allowed.

17. The ranging method according to claim 16, wherein the privacy profile is located in a unified data management (UDM) of the UE.

18. The ranging method according to claim 16, wherein providing the service parameter for the ranging based on the sidelink comprises:
receiving a location information request sent by the location network function, wherein the location information request is used to request location information of the UE from the AMF;
sending a response to the location information request to the location network function, wherein the response to the location information request comprises the location information of the UE, the location information of the UE is used for the location network function to determine whether to allow the UE to perform the ranging in combination with the area range.

19. The ranging method according to claim 18, wherein the location request information further comprises a UE verification indication, and the UE verification indication is used to indicate at least one of:
associated information of the ranging;
whether to indicate associated information of the ranging to the UE; or
whether to verify associated information of the ranging by the UE;
wherein the UE verification indication is set by the location network function based on the privacy profile.

20. The ranging method according to claim 19, wherein the associated information of the ranging comprises at least one of:
an application identifier of an application requesting to perform the ranging; or
a type of the ranging.

21. The ranging method according to claim 19, wherein providing the service parameter for the ranging based on the sidelink comprises:
in response to the UE verification indication indicating that the associated information of the ranging needs to be notified to the UE, sending first notification information to the UE, wherein the first notification information is used to notify the associated information of the ranging.

22. The ranging method according to claim 19, wherein providing the service parameter for the ranging based on the sidelink comprises:
in response to the UE verification indication indicating that the associated information of the ranging is to be verified by the UE, sending second notification information to the UE, wherein the second notification information is used to indicate that the associated information of the ranging needs to be verified by the UE;
receiving verification result information sent by the UE in response to the second notification information, wherein the verification result information is used to indicate a verification result of the UE verifying the associated information of the ranging;
wherein sending the response to the location information request to the location network function comprises:
sending the response to the location information request carrying the verification result to the location network function.

23. The ranging method according to claim 22, further comprising:
in response to determining that the UE needs to send the verification result information and the verification result information is not received, determining that the verification result is that the UE fails to verify the associated information of the ranging.

24. The ranging method according to claim 22, wherein
the verification result information further comprises time information for indicating a time when the UE is allowed and/or is not allowed to perform the ranging;
sending the response to the location request to the location network function comprises:
sending the response carrying the time information to the location network function.

25. The ranging method according to any one of claims 15 to 24, wherein providing the service parameter for the ranging based on the sidelink comprises:
receiving a second ranging request sent by the location network function, wherein the second ranging request is sent by the location network function based on the privacy profile to allow the UE to perform the ranging;
instructing the UE to perform the ranging based on the second ranging request.

26. A ranging method, performed by a UE, comprising:
performing ranging based on a sidelink, wherein the ranging is performed by a location network function at least based on a privacy profile of the UE.

27. The ranging method according to claim 26, wherein the privacy profile is used to indicate at least one of:
whether the ranging is allowed;
an area range in which the ranging is allowed; or
a time range in which the ranging is allowed.

28. The ranging method according to claim 26, wherein the privacy profile is located in a UDM corresponding to the UE.

29. The ranging method according to claim 27, further comprising:
receiving first notification information sent by an access and mobility management function (AMF), wherein the first notification information is used to notify associated information of the ranging; the first notification information is sent by the AMF based on a UE verification indication carried in location request information sent by the location network function, and the UE verification indication is determined by the location network function based on the privacy profile.

30. The ranging method according to claim 27, further comprising:
receiving second notification information sent by the AMF, wherein the second notification information is used to notify the UE of associated information of the ranging and to obtain verification, the second notification information is sent by the AMF based on a UE verification indication carried in location request information sent by the location network function, and the UE verification indication is determined by the location network function based on the privacy profile.

31. The ranging method according to claim 30, further comprising:
sending verification result information to the AMF, wherein the verification result information is used to indicate a verification result of the UE verifying the associated information of the ranging.

32. The ranging method according to claim 31, wherein the verification result information further comprises time information for indicating a time when the UE is allowed and/or not allowed to perform the ranging.

33. The ranging method according to claim 31, further comprising:
in response to failing to verify the associated information of the ranging, not sending the verification result information to the AMF;
in response to failing to verify the associated information of the ranging, sending the verification result information indicating that the verification result is a verification failure to the AMF.

34. The ranging method according to any one of claims 29 to 33, wherein the location information request further comprises a UE verification indication, and the UE verification indication is used to indicate at least one of:
associated information of the ranging;
whether to indicate associated information of the ranging to the UE; or
whether to verify associated information of the ranging by the UE;
wherein the UE verification indication is set by the location network function based on the privacy profile.

35. The ranging method according to any one of claims 29 to 33, wherein the associated information of the ranging comprises at least one of:
an application identifier of an application requesting to perform the ranging; or
a type of the ranging.

36. The ranging method according to any one of claims 26 to 33, wherein the UE is instructed by a second ranging request sent by the location network function and received by the AMF, to perform the ranging, and the second ranging request is sent by the location network function upon determining to allow the UE to perform the ranging based on the privacy profile.

37. A ranging device, comprising:
a processing module, configured to determine a service parameter for ranging at least based on a privacy profile of a UE related to a first ranging request; wherein the first ranging request is a request for performing the ranging via a sidelink.

38. A ranging device, comprising:
a transceiver module, configured to provide a service parameter for ranging based on a sidelink, wherein the service parameter for the ranging is determined by a location network function at least based on a privacy profile of a UE associated with the ranging.

39. A ranging device, comprising:
a processing module, configured to perform ranging based on a sidelink, wherein the ranging is performed by a location network function at least based on a privacy profile of a UE.

40. A communication device, comprising a processor, a memory, and an executable program stored on the memory and executed by the processor, wherein when the processor executes the executable program the steps of the ranging method according to any one of claims 1 to 14, or 15 to 25, or 26 to 36 are implemented.

41. A storage medium storing an executable program, wherein the executable program, when executed by a processor, implements the steps of the ranging method according to any one of claims 1 to 14, or 15 to 25, or 26 to 36.
